# EUROPEAN PATENT SPECIFICATION

(11) **EP 4 355 019 B1**
(45) Date of publication and mention of the grant of the patent: **25.11.2026**
(21) Application number: 22852042.5
(22) Date of filing: 29.07.2022
(51) Int. Cl.: H04W 84/06, H04B 7/185, H04L 1/00, H04L 69/04, H04L 69/326

(54) **DATA TRANSMISSION CONTROL METHOD AND SYSTEM IN A SATELLITE COMMUNICATION SYSTEM SUPPORTING A SHORT MESSAGE COMMUNICATION FUNCTION COMMUNICATION SYSTEM, AND RELATED APPARATUS**
VERFAHREN UND SYSTEM ZUR DATENÜBERTRAGUNGSSTEUERUNG IN EINEM SATELLITENKOMMUNIKATIONSSYSTEM MIT EINER FUNKTION ZUR ÜBERTRAGUNG VON KURZNACHRICHTEN UND ZUGEHÖRIGE VORRICHTUNG
SYSTÈME ET PROCÉDÉ DE COMMANDE DE TRANSMISSION DE DONNÉES DANS UN SYSTÈME DE COMMUNICATION PAR SATELLITE PRENDANT EN CHARGE UNE FONCTION DE COMMUNICATION PAR MESSAGES COURTS, ET APPAREIL ASSOCIÉ

(30) Priority: 31.07.2021 CN 202110877288
(43) Date of publication of application: 17.04.2024
(73) Proprietor: Huawei Technologies Co., Ltd., Longgang Shenzhen, Guangdong 518129 (CN)
(72) Inventor: GAN, Wenyu, Shenzhen, Guangdong 518129 (CN); QIAN, Feng, Shenzhen, Guangdong 518129 (CN); ZHU, Xudong, Shenzhen, Guangdong 518129 (CN); YAO, Zhendong, Shenzhen, Guangdong 518129 (CN); LI, Zhenzhou, Shenzhen, Guangdong 518129 (CN); YAO, Chuting, Shenzhen, Guangdong 518129 (CN)
(74) Representative: Pfenning, Meinig & Partner mbB
(86) International application number: PCT/CN2022/108771
(87) International publication number: WO 2023/011329

(56) References cited:
- WO-A1-2020/198234
- WO-A1-2021/146863
- CN-A- 102 315 923
- CN-A- 104 683 017
- CN-B- 102 769 574
- US-A1- 2018 205 662
- TANG YIFANG, ZHONG DA-FU: "Improved Algorithm about Long Message Transmission Mechanism of Beidou Navigation Satellite System Based on Data Ｒedundancy", COMMAND CONTROL & SIMULATION, vol. 38, no. 1, 29 February 2016 (2016-02-29), pages 61 - 65, XP093032129, ISSN: 1673-3819, DOI: 10.3969/j.issn.1673-3819.2016.01.014
- LIU FEI, LIN LIN; XU WEN-JIANG: "Monitoring data transmission technology based on Beidou ＲDSS", XINXI JISHU = INFORMATION TECHNOLOGY, XINXI CHANYEBU DIANZI XINXI ZHONGXIN, CN, 31 January 2020 (2020-01-31), CN , XP093032127, ISSN: 1009-2552, DOI: 10.13274/j.cnki.hdzj.2020.01.004

## Description

### TECHNICAL FIELD

This application relates to the satellite communication field, and in particular, to a data transmission control method in a BeiDou communication system,a communication apparatus and a chip/chip system.

### BACKGROUND

A BeiDou satellite navigation system is an important infrastructure that integrates positioning, timing, and communication. A BeiDou short message communication service is one of features of the BeiDou satellite navigation system that is different from other global navigation systems such as GPS, GLONASS, and GALILEO. The BeiDou short message communication service is especially applicable to areas in which mobile communication is not covered or cannot be covered, or a communication system is damaged, for example, oceans, deserts, grasslands, and uninhabited areas. A BeiDou-3 satellite short message system upgrades a short message technology system and opens some necessary resources of the BeiDou short message system for civil use. For features of civil services and devices, communication protocols need to be designed based on the features of the BeiDou short message system.

Because a communication system of a BeiDou short message service performs communication through a satellite link, main features of the system are as follows: 1. A delay is long. 2. A link loss is large. 3. Supported services are mainly burst short message services. 4. Link state management, mobility management, broadcast control information, and the like are not supported. A current wireless communication protocol is not applicable to the communication system of the BeiDou short message service. A reason is that because a satellite communication propagation distance is long, the communication system of the BeiDou short message service has a high requirement on transmit power of a terminal. In addition, due to a limitation of a radio frequency capability of a civil terminal, an inbound rate of the civil terminal is far lower than that of a dedicated terminal. Therefore, a data transmission procedure needs to be specifically designed, to reduce signaling overheads and invalid sending under constraints of a BeiDou communication system and a limited rate, so that reliable and orderly data transmission is achieved.CN102769575 discusses method and a device capable of conducting business hardware acceleration. Wo2020198234 discusses methods, systems, and devices for uplink data integrity protection in a communication system.

### SUMMARY

This application provides a data transmission control method in a BeiDou communication system, a system, and a related apparatus. According to the method provided in this application, a terminal may reduce signaling overheads and invalid sending under constraints of a BeiDou communication system and a limited rate, to implement reliable and orderly data transmission. The invention is defined by a data transmission control method in a satellite communication system supporting a short message communication function according to claim 1, a data transmission control method in a satellite communication system supporting a short message communication function according to claim 8, a communication apparatus supporting a short message communication function according to claim 14 and a chip or a chip system supporting a short message communication function according to claim 15. Further embodiments are defined by the dependent claims.

### BRIEF DESCRIPTION OF DRAWINGS

FIG. 1 is a schematic diagram of an architecture of a BeiDou communication system 10 according to an embodiment of this application;
FIG. 2 is a schematic diagram of a data inbound transmission process in a BeiDou communication system according to an embodiment of this application;
FIG. 3A, FIG. 3B, and FIG. 3C are a schematic diagram of a protocol encapsulation architecture of inbound data of a BeiDou communication system 10 according to an embodiment of this application;
FIG. 4A and FIG. 4B are a schematic diagram of a protocol parsing architecture of inbound data of a BeiDou communication system 10 according to an embodiment of this application;
FIG. 5 is a schematic diagram of a scenario in which a plurality of MDCP PDUs are successfully transmitted according to an embodiment of this application;
FIG. 6 is a schematic diagram of a scenario in which a separate MDCP PDU is successfully transmitted according to an embodiment of this application;
FIG. 7 is a schematic diagram of a scenario in which a plurality of MDCP PDUs are unsuccessfully transmitted according to an embodiment of this application;
FIG. 8 is a schematic diagram of a scenario in which a plurality of MDCP PDUs are unsuccessfully transmitted according to an embodiment of this application;
FIG. 9 is a schematic diagram of a scenario in which a plurality of MDCP PDUs are successfully transmitted according to an embodiment of this application;
FIG. 10A and FIG. 10B are a schematic flowchart of protocol processing of data at an MDCP layer and an SLC layer in a BeiDou communication system 10 according to an embodiment of this application;
FIG. 11A-1, FIG. 11A-2, and FIG. 11A-3 are a schematic diagram of a protocol encapsulation architecture of outbound data of a BeiDou communication system 10 according to an embodiment of this application;
FIG. 11B-1, FIG. 11B-2, and FIG. 11B-3 are a schematic diagram of a protocol parsing architecture of outbound data of a BeiDou communication system 10 according to an embodiment of this application;

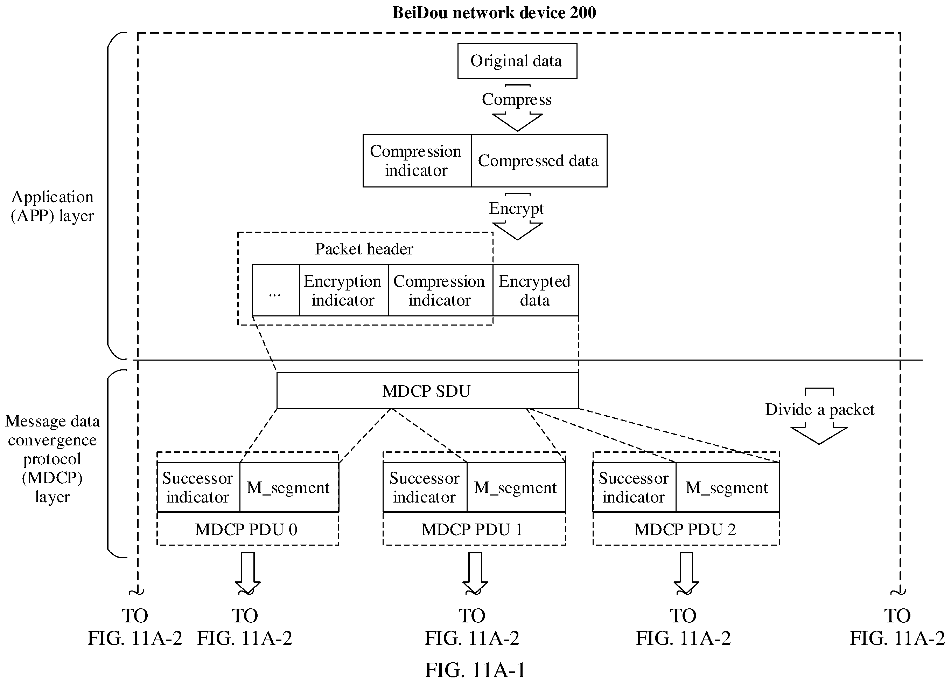

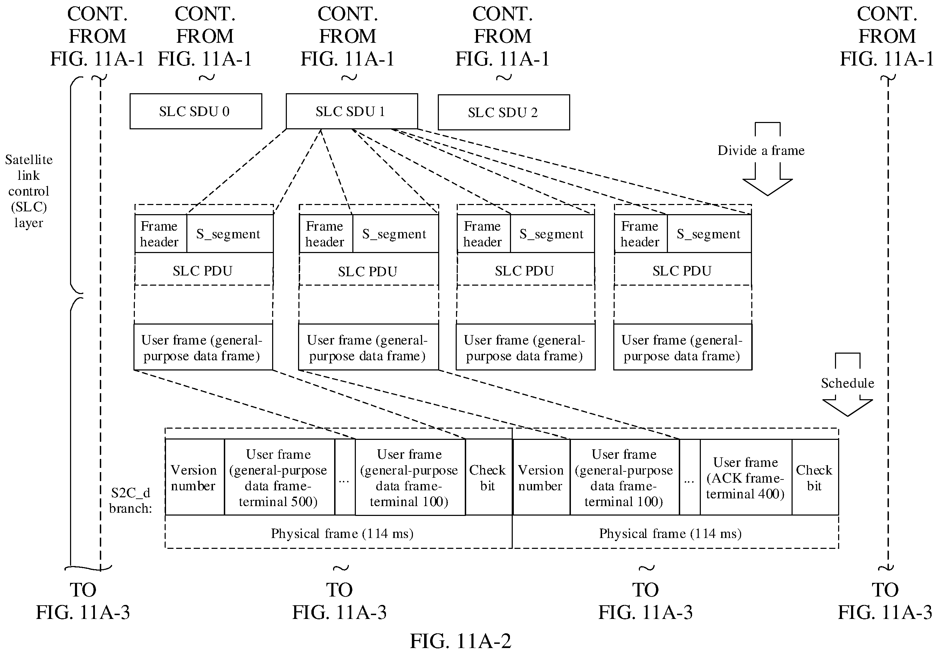

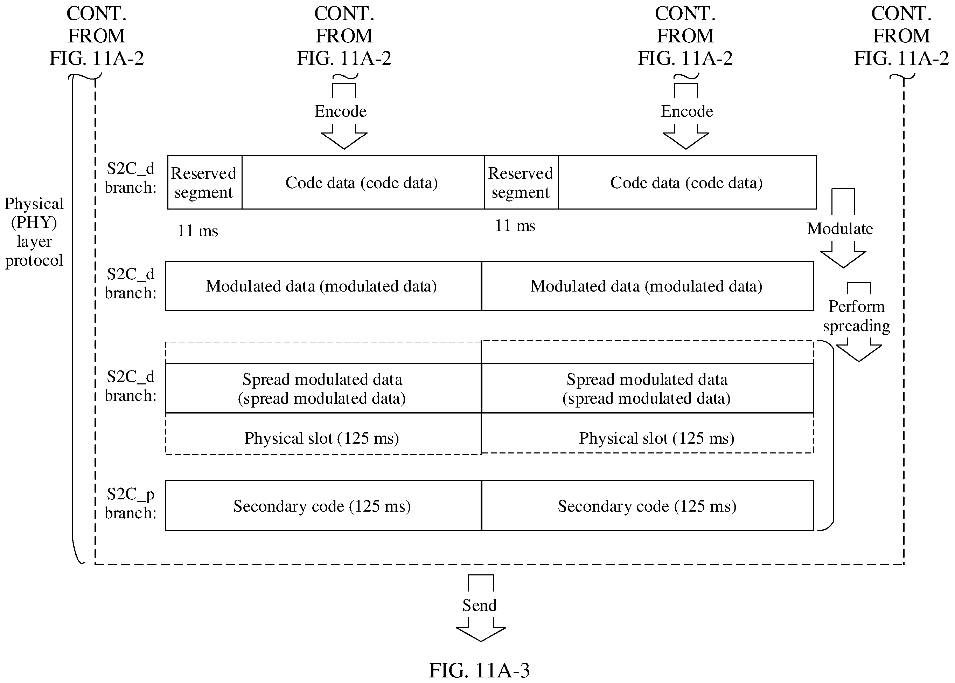

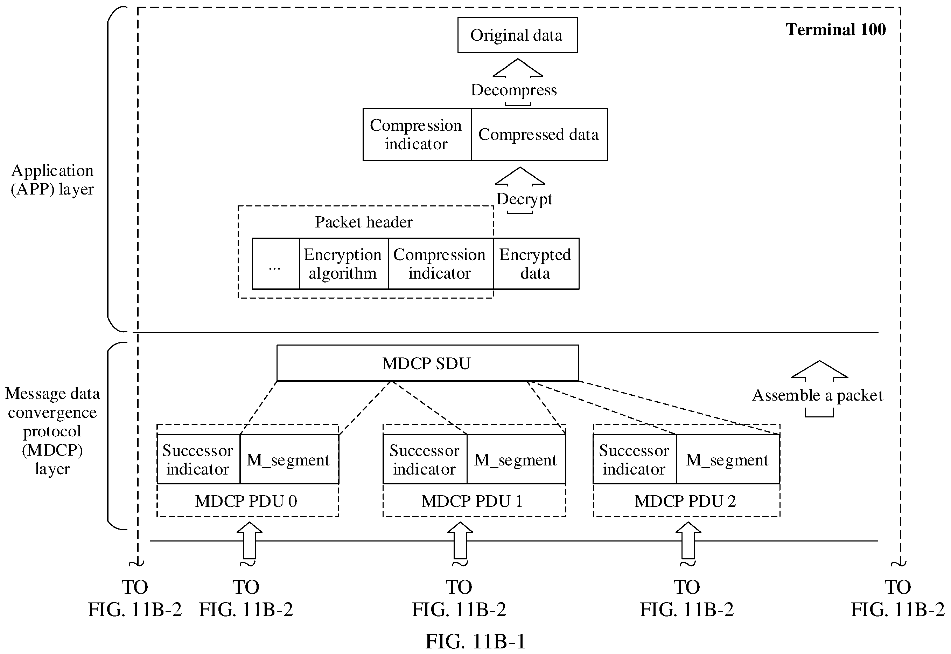

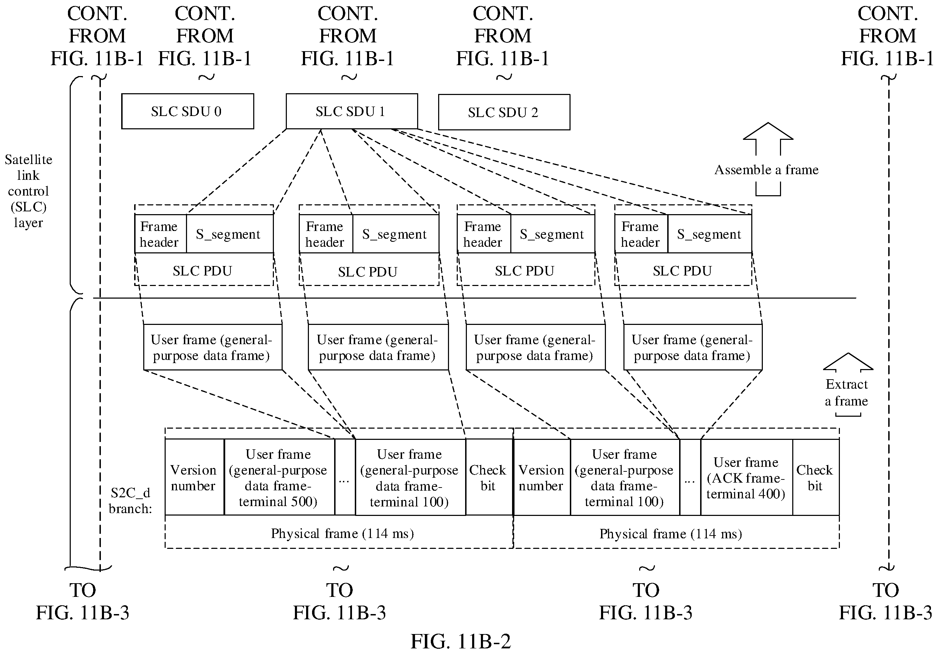

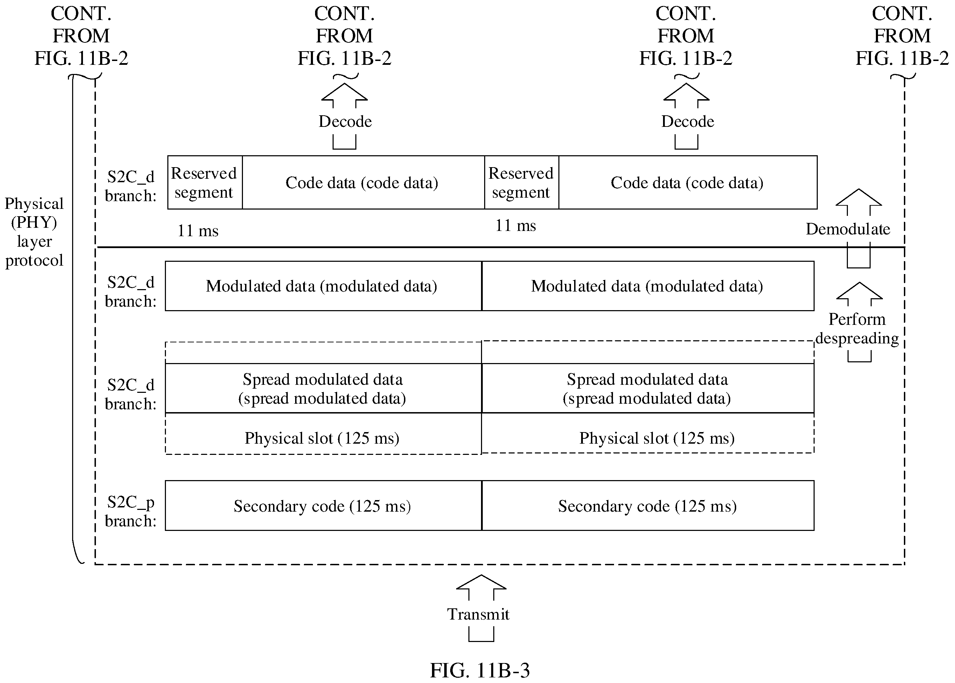

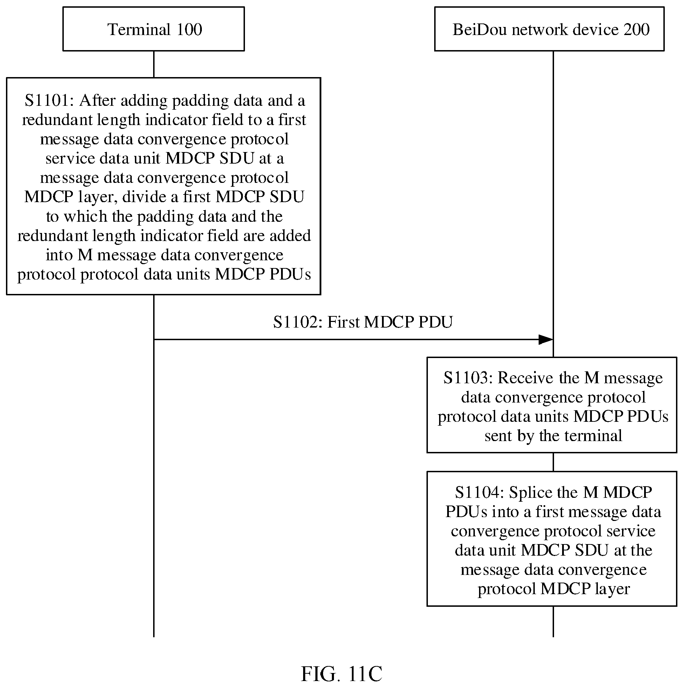

FIG. 11C is a schematic flowchart of a data transmission control method in a BeiDou communication system according to an embodiment of this application;

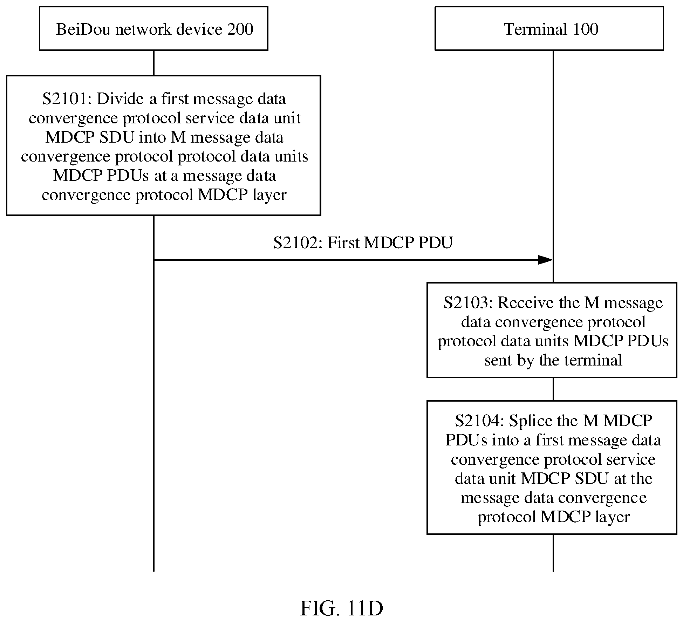

FIG. 11D is a schematic flowchart of a data transmission control method in a BeiDou communication system according to an embodiment of this application;

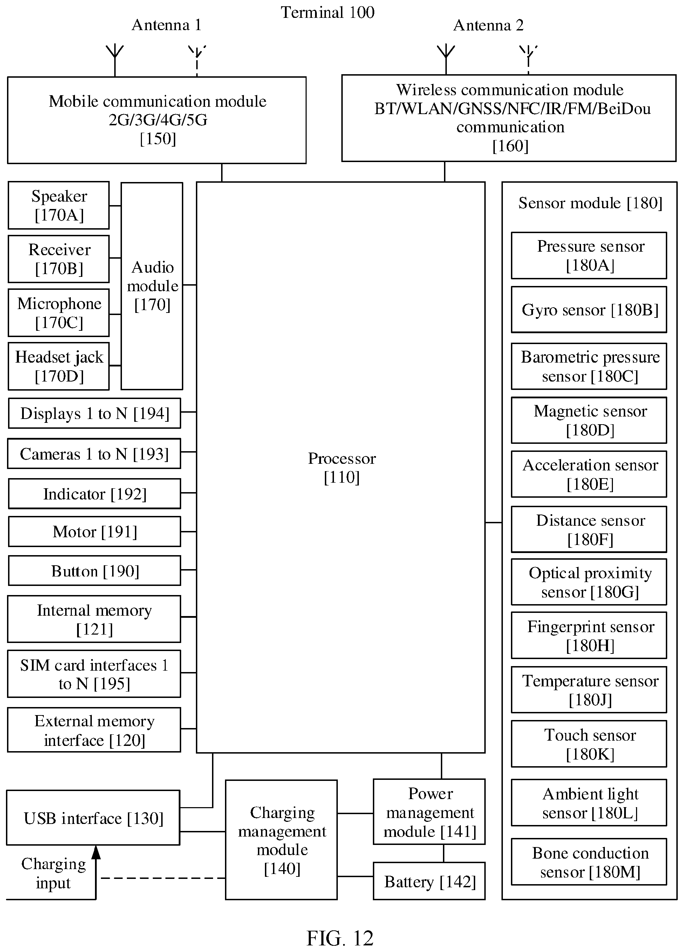

FIG. 12 is a schematic diagram of a structure of an electronic device according to an embodiment of this application;

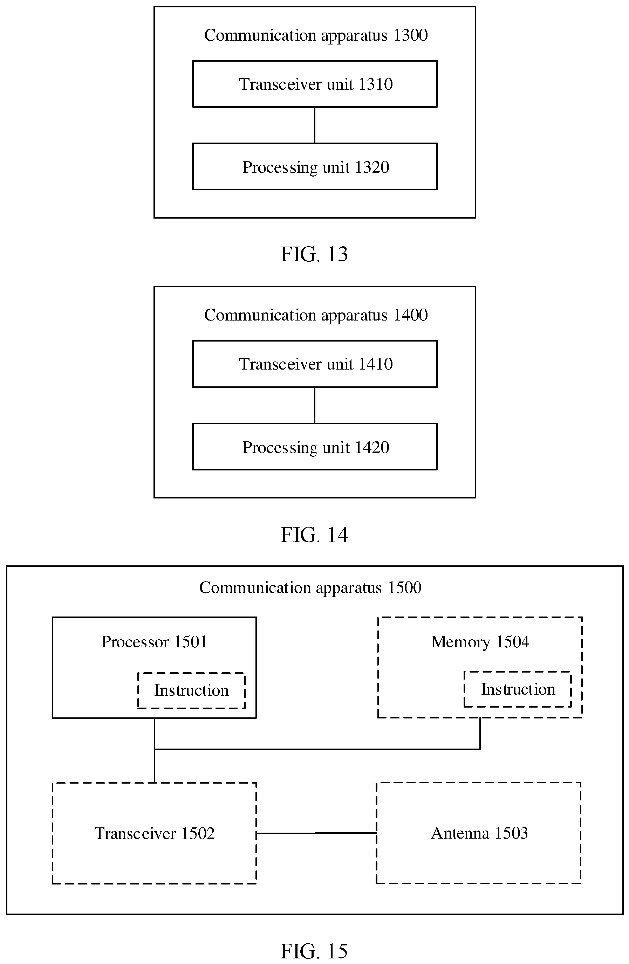

FIG. 13 is a schematic diagram of a structure of a communication apparatus according to an embodiment of this application;
FIG. 14 is a schematic diagram of a structure of another communication apparatus according to an embodiment of this application;
FIG. 15 is a schematic diagram of a structure of another communication apparatus according to an embodiment of this application; and

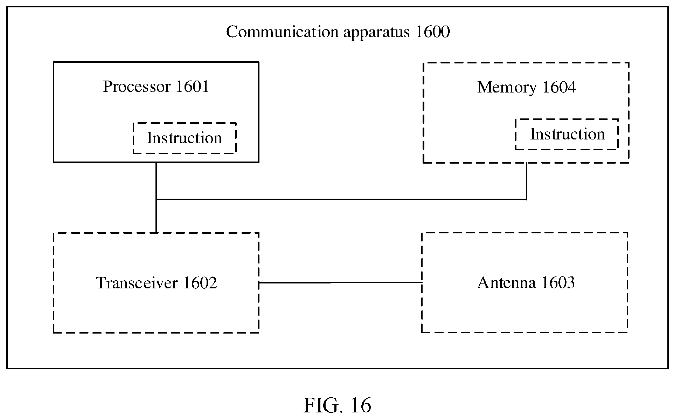

FIG. 16 is a schematic diagram of a structure of another communication apparatus according to an embodiment of this application.

### DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular expression forms used in this specification and the appended claims of this application are also intended to include plural expression forms, unless otherwise clearly specified in the context. It should be further understood that the term "and/or" used in this application indicates and includes any or all possible combinations of one or more listed items.

The following terms "first" and "second" are merely used for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

**The following describes a BeiDou communication system 10 provided in embodiments of this application.**

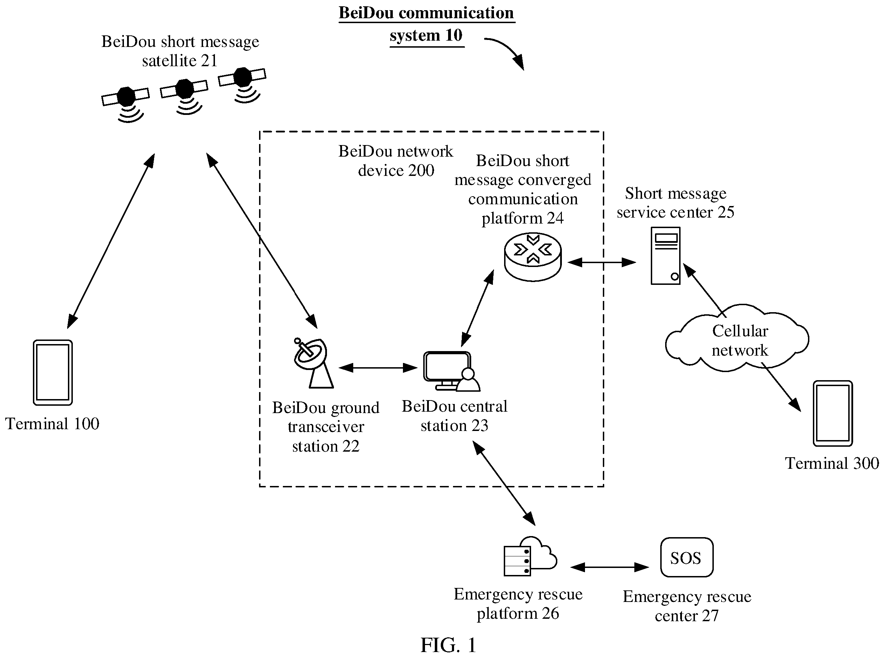

FIG. 1 is a schematic diagram of an architecture of a BeiDou communication system 10 according to an embodiment of this application.

As shown in FIG. 1, the BeiDou communication system 10 may include a terminal 100, a BeiDou short message satellite 21, a BeiDou network device 200, a short message service center 25, and a terminal 300. Optionally, the BeiDou communication system 10 may further include an emergency rescue platform 26 and an emergency rescue center 27.

The terminal 100 may send short message information to the BeiDou short message satellite 21, and the BeiDou short message satellite 21 performs only relay, and directly forwards the short message information sent by the terminal 100 to the BeiDou network device 200 on the ground. The BeiDou network device 200 may parse, according to a BeiDou communication protocol, the short message information forwarded by the satellite, and forward, to the short message service center (short message service center, SMSC) 25, packet content, of a general-purpose packet type, that is parsed out from the short message information. The short message service center 25 may forward the packet content to the terminal 300 through a conventional cellular communication network. The BeiDou network device 200 may also send, to the emergency rescue center 27 through the emergency rescue platform 26, a packet, of an emergency rescue type, that is sent by the terminal 100.

The terminal 300 may also send a short message service message to the short message service center 25 through the conventional cellular communication network. The short message service center 25 may forward the short message service message of the terminal 300 to the BeiDou network device 200. The BeiDou network device 200 may send, through relay, the short message service message of the terminal 300 to the terminal 100 through the BeiDou short message satellite 21.

The BeiDou network device 200 may include a BeiDou ground transceiver station 22, a BeiDou central station 23, and a BeiDou short message converged communication platform 24. The BeiDou ground transceiver station 22 may include one or more devices having a sending function and one or more devices having a receiving function, or may include one or more devices having a sending function and a receiving function. This is not limited herein. The BeiDou ground transceiver station 22 may be configured to perform a data processing function of the BeiDou network device 200 at a physical (physical layer protocol, PHY) layer. The BeiDou central station 23 may be used for a data processing function by the BeiDou network device 200 at a satellite link control (satellite link control protocol, SLC) layer and a message data convergence protocol (message data convergence protocol, MDCP) layer. The BeiDou short message converged communication platform 24 may be configured to perform a data processing function at an application (application layer protocol, APP) layer.

Because the BeiDou communication system 10 performs communication through a satellite link, main features of the BeiDou communication system 10 are as follows: A delay is long (about 270 ms in one direction), and a link loss is large. Currently, a service supported by the BeiDou communication system 10 is mainly a burst short message service, and the BeiDou communication system 10 does not support link state management, mobility management, broadcast control information, and the like.

The terminal 100 may actively send data to the BeiDou network device 200 through the BeiDou short message satellite 21. However, because there is no air interface signaling, the ground central station cannot actively page a user. Because a satellite communication propagation distance is long, the BeiDou communication system 10 has a high requirement on transmit power of the terminal 100. Due to a limitation of a radio frequency component on the current terminal 100, the terminal 100 cannot continuously send a signal to the BeiDou short message satellite 21 for long time. To avoid damaging the radio frequency component on the terminal 100 as much as possible, after the radio frequency component on the terminal 100 keeps working in a sending state for a period of time, the radio frequency component on the terminal 100 needs to stop working for a period of time before the terminal 100 can continue to switch to the sending state and continue to work. Duration of the sending state on the terminal 100 is determined by a bottom-layer hardware capability of the terminal 100. In the BeiDou communication system 10, to ensure that data received by the terminal 100 and data sent by the terminal 100 do not interfere with each other, the terminal 100 does not support simultaneous sending of data and receiving of data. After sending the data, the terminal 100 needs to wait to receive the data sent by the BeiDou network device 200.

A working mode of the BeiDou network device 200 may be a duplex mode. The BeiDou network device 200 may simultaneously send and receive data, and the BeiDou network device 200 may send and receive data for long time.

Generally, common consumers may send a large amount of data at a time. When there is a large amount of data, the terminal needs to send the data in a plurality of frames. In this way, sending time is long. To avoid invalid sending, a separate layer of protocols is required to manage a plurality of frames sent by a user. Therefore, a message data convergence protocol (message data convergence protocol, MDCP) layer is defined. The MDCP layer may receive application layer data transferred by an application layer, and send a processed data packet to a lower-layer satellite link control (satellite link control protocol, SLC) layer.

Based on the MDCP layer, embodiments of this application provides a data transmission control method in a BeiDou communication system. The terminal 100 may use an application layer packet as one MDCP SDU at the MDCP layer. The terminal 100 may add padding (padding) data to a tail of one MDCP SDU at the MDCP layer to a specified length, and add a redundant length indicator field to a tail of a padding data field or a header of the MDCP SDU. The redundant length indicator field may indicate a length of the padding data. The terminal 100 may divide the MDCP SDU to which the padding redundant data and the redundant length indicator field are added into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field. The successor indicator field may indicate that the current MDCP PDU is a start frame, a mediate frame, or the last frame in continuously sent frames, or is a separately sent frame. The terminal 100 may send one or more MDCP PDUs to the BeiDou network device 200. The BeiDou network device 200 may combine a plurality of MDCP PDUs into one MDCP SDU based on the successor indicator field in the MDCP PDU.

In this way, the terminal 100 may also send data to the BeiDou network device 200 under constraints of a BeiDou communication system and a limited rate.

In embodiments of this application, a scenario in which the terminal 100 sends data to the BeiDou network device 200 is defined as an inbound scenario, and a scenario in which the BeiDou network device 200 sends data to the terminal 100 is defined as an outbound scenario.

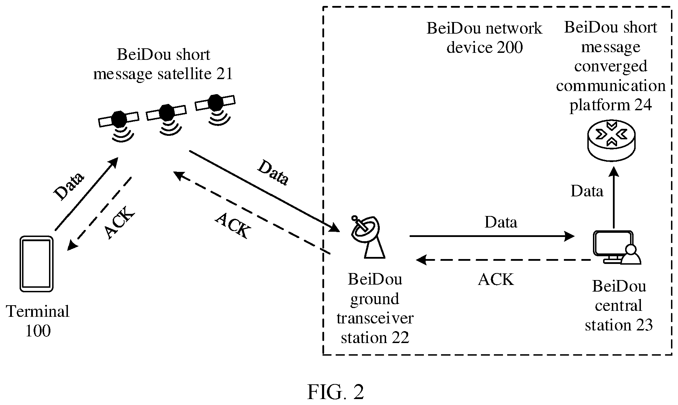

**FIG. 2** **shows a data inbound transmission process in a BeiDou communication system according to an embodiment of this application.**

As shown in FIG. 2, data inbound may mean that the terminal 100 sends data to the BeiDou network device 200. For example, the terminal 100 may send a data frame to the BeiDou ground transceiver station 22. The BeiDou ground transceiver station 22 may send the data frame to the BeiDou central station 23. The BeiDou central station 23 may aggregate the data frame into a data packet and report the data packet to the BeiDou short message converged communication platform 24. After receiving the data frame sent by the terminal 100, the BeiDou central station 23 may return an SLC-layer acknowledgment character (acknowledge character, ACK) to the terminal 100. The ACK may indicate whether the BeiDou network device 200 successfully receives the data frame sent by the terminal 100.

**The following describes a protocol encapsulation architecture of inbound data of a BeiDou communication system 10 according to an embodiment of this application.**

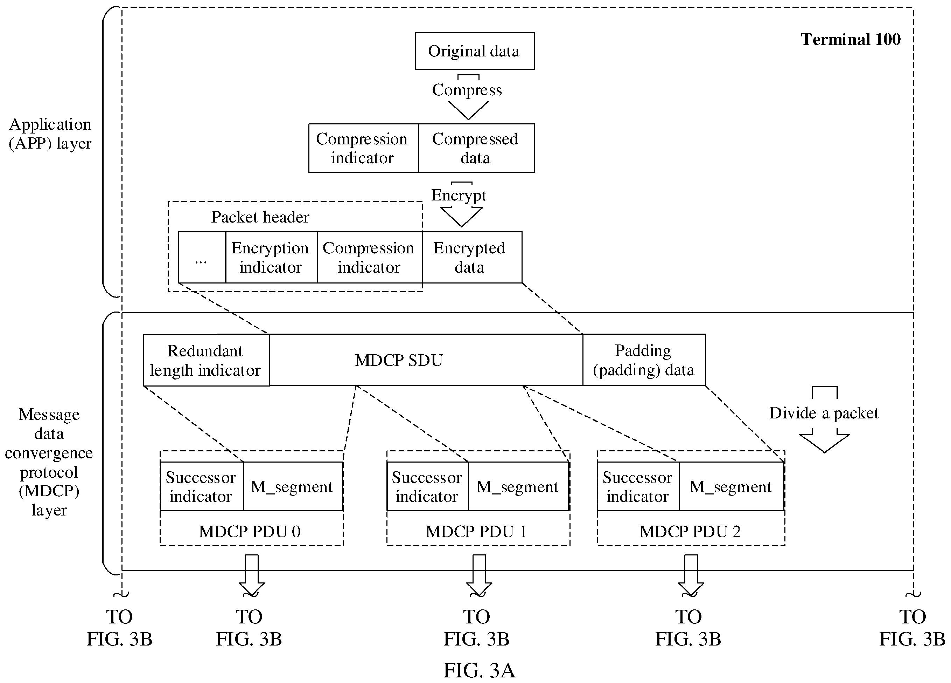

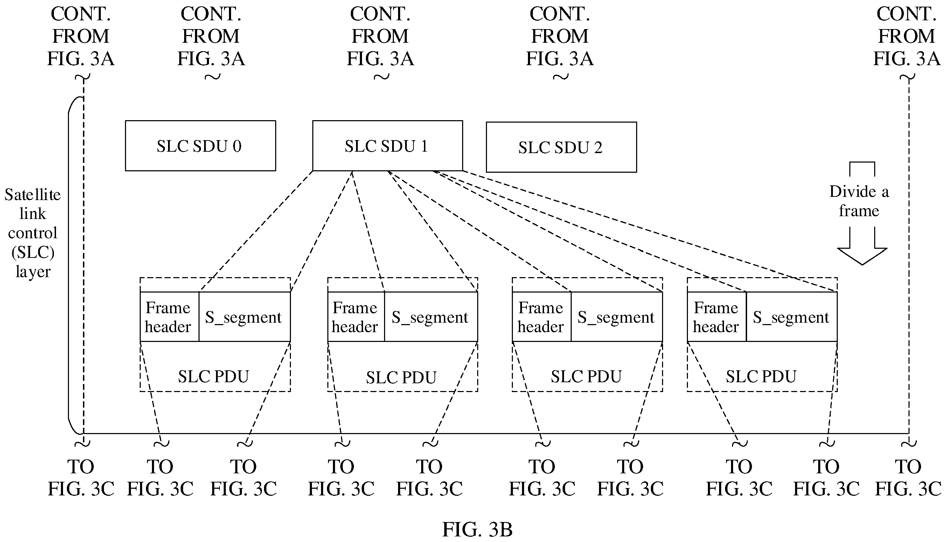

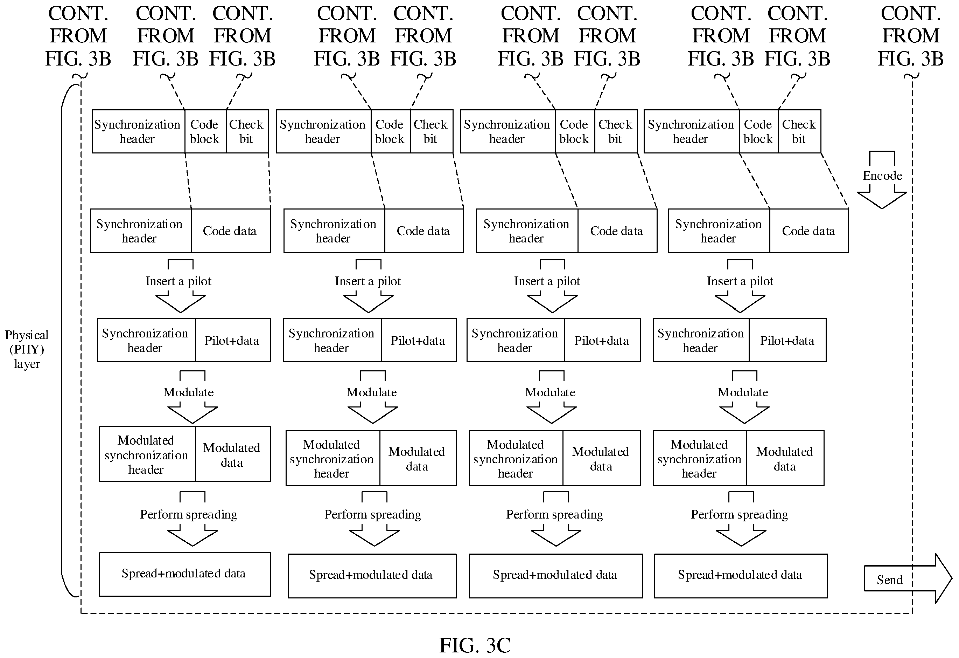

FIG. 3A, FIG. 3B, and FIG. 3C are a schematic diagram of a protocol encapsulation architecture of inbound data of a BeiDou communication system 10 according to an embodiment of this application.

As shown in FIG. 3A, FIG. 3B, and FIG. 3C, a BeiDou message transport protocol layer of the terminal 100 may be divided into an application layer (application layer protocol), a message data convergence protocol (message data convergence protocol, MDCP) layer, a satellite link control (satellite link control protocol, SLC) layer, and a physical (physical layer protocol, PHY) layer.

When the terminal 100 sends data to the BeiDou network device 200, a working procedure of the BeiDou message transport protocol of the terminal 100 may be as follows:

At the APP layer, the terminal 100 may compress original data into compressed data by using a compression algorithm, and add a compression indicator field before the compressed data, where the compression indicator field may indicate a compression algorithm type of the compressed data. Then, the terminal 100 may encrypt the compressed data to obtain encrypted data, and add an encryption algorithm field to a header of the encrypted data, where the encryption algorithm field indicates an encryption algorithm type of the encrypted data. The terminal 100 may encapsulate the encrypted data, the compression indicator field, and the encryption indicator field into an application layer packet and deliver the application layer packet to the MDCP layer. The application layer packet includes a packet header and packet data. The packet header includes the compression indicator field, the encryption indicator field, and the like. The packet data includes the foregoing encrypted data.

Optionally, the terminal 100 may alternatively encrypt the compression indicator field and the compressed data together, to obtain the encrypted data.

At the MDCP layer, the terminal 100 may obtain, through an inter-layer interface, an application layer packet delivered by the APP layer, and use the application layer packet as one MDCP SDU. At the MDCP layer, the terminal 100 may add padding (padding) data to a tail of the MDCP SDU to a specified length, and add a redundant length indicator field to a header of the MDCP SDU. The redundant length indicator field may indicate a length of the padding data. The terminal 100 may divide the MDCP SDU to which the padding data and the redundant length indicator field are added into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field. The successor indicator field may indicate that the current MDCP PDU is a start MDCP PDU, a mediate MDCP PDU, or the last MDCP PDU in continuously sent MDCP PDUs, or is a separately sent MDCP PDU.

At the SLC layer, the terminal 100 may obtain, through an inter-layer interface, an MDCP PDU delivered by the MDCP layer, and use the MDCP PDU as an SLC SDU. At the SLC layer, the terminal 100 may segment the SLC SDU into one or more pieces of (a maximum quantity is 4) SLC segment data (S_segment) with a fixed length, and add frame header information to a header of each S_segment, to obtain an SLC PDU. The frame header information includes a service data unit alternate indicator (service data unit alternated indicator, SAI) field, a total frame quantity field, and a frame sequence number field.

The SAI field may indicate whether the SLC PDU belongs to one SLC SDU that has not been sent.

The total frame quantity field may indicate a total quantity of SLC PDUs included in an SLC SDU to which the SLC PDU belongs.

The frame sequence number field may indicate a sequence number of the SLC PDU in the SLC SDU to which the SLC PDU belongs.

At the PHY layer, the terminal 100 may obtain, through an inter-layer interface, an SLC PDU delivered by the SLC layer, use the SLC PDU as a code block (code block) of the PHY layer, add a synchronization header to a header of the code block, and add a check bit field to a tail of the code block. In the BeiDou communication system 10, a cyclic redundancy check (cyclic redundancy check, CRC) may be used to check the code block. Therefore, the check bit field may include the CRC code. The terminal 100 may perform encoding (for example, polar encoding) on the code block and the check bit field, to obtain code data (code data), and then insert a pilot into the code data, to obtain pilot code data (pilot+data). Then, the terminal 100 sequentially modulates the synchronization header and the pilot code data by using bottom-layer hardware, to obtain modulated data (modulated data). The terminal 100 may perform spreading on the modulated data, to obtain spread modulated data (spread+modulated data). The terminal 100 may send the spread modulated data to the BeiDou short message satellite 21, and forward, through relay, the data to the BeiDou network device 200 through the BeiDou short message satellite 21.

**The following describes a protocol parsing architecture of inbound data of a BeiDou communication system 10 according to an embodiment of this application.**

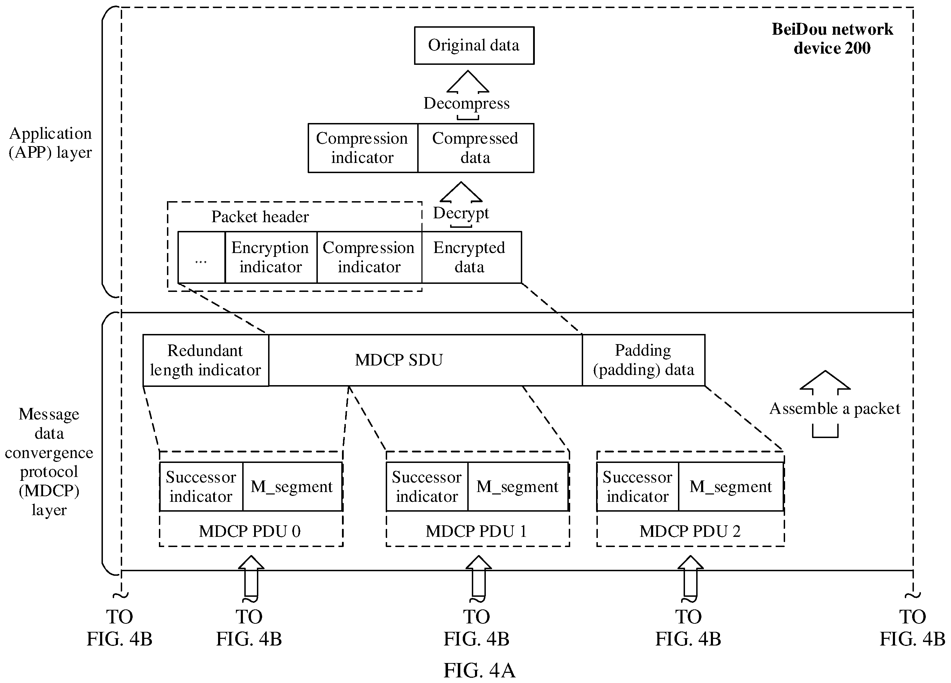

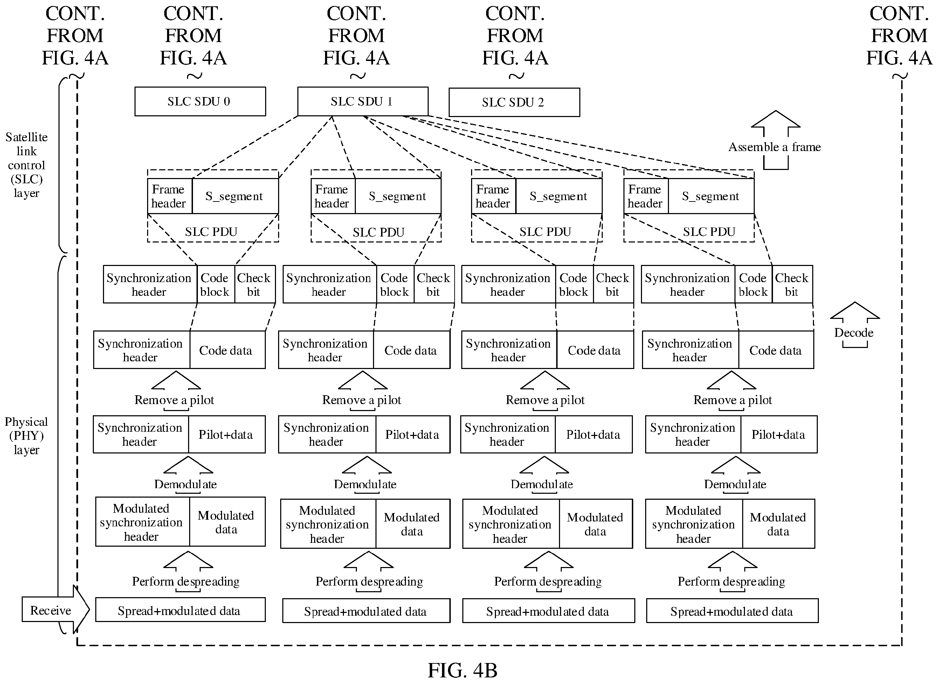

FIG. 4A and FIG. 4B are a schematic diagram of a protocol parsing architecture of inbound data of a BeiDou communication system 10 according to an embodiment of this application.

As shown in FIG. 4A and FIG. 4B, a BeiDou short message transport protocol layer of the BeiDou network device 200 may be divided into an application layer (application layer protocol), a message data convergence protocol (message data convergence protocol, MDCP) layer, a satellite link control (satellite link control protocol, SLC) layer, and a physical (physical layer protocol, PHY) layer. The BeiDou network device 200 may include the BeiDou ground transceiver station 22, the BeiDou central station 23, and the BeiDou short message converged communication platform 24. The BeiDou ground transceiver station 22 may be configured to be responsible for protocol processing at the PHY layer. The BeiDou central station 23 may be configured to be responsible for protocol processing at the SLC layer and the MDCP layer. The BeiDou short message converged communication platform 24 may be configured to be responsible for protocol processing at the APP layer.

When the BeiDou network device 200 receives data sent by the terminal 100, a working procedure of the BeiDou short message transport protocol layer of the BeiDou network device 200 may be as follows:
At the PHY layer, the BeiDou network device 200 may obtain modulated and spread pilot code data sent by the terminal 100. The BeiDou network device 200 may perform despreading on the received spread modulated data (spread+modulated data), to obtain modulated data (modulated data). Then, the BeiDou network device 200 may demodulate the modulated data to obtain pilot code data (pilot+data). Then, the BeiDou network device 200 removes pilot information from the pilot code data, to obtain code data (code data). Then, the BeiDou network device 200 may decode the code data, and verify integrity of a code block (code block) by using check data in a check bit field. If the code block is complete, the BeiDou network device 200 may extract the code block (code block), and deliver the code block to the SLC layer through an inter-layer interface, and uses the code block as an SLC PDU of the SLC layer.

At the SLC layer, the BeiDou network device 200 may splice SLC PDUs belonging to a same SLC SDU into one SLC SDU based on frame header information of the SLC PDU. The BeiDou network device 200 may deliver the SLC SDU to the MDCP layer through an inter-layer interface, and uses the SLC SDU as an MDCP PDU of the MDCP layer.

At the MDCP layer, the BeiDou network device 200 may splice all MDCP PDUs belonging to a same MDCP SDU into one MDCP SDU. The BeiDou network device 200 may deliver the MDCP SDU to the APP layer through an inter-layer interface, and use the MDCP SDU as an application layer packet received by the APP layer.

At the APP layer, the BeiDou network device 200 may decrypt and decompress an application layer packet based on a packet header of the application layer packet, to obtain original data.

In embodiments of this application, the foregoing protocol processing process is merely an example for description, and a specific operation of protocol processing is not limited in this application.

**The following specifically describes fields related to the MDCP SDU and the MDCP PDU at the MDCP layer.**

### 1. Redundant length indicator field in the MDCP SDU

The redundant length indicator field indicates a padding length in the MDCP SDU. In a possible implementation, a length of the redundant length indicator field is eight bits. It may be understood that the length of the redundant length indicator field is not limited in embodiments of this application.

### 2. Successor indicator field in the MDCP PDU

A data length of the successor indicator field may be two bits. In a possible implementation, a value of the successor indicator field and a corresponding meaning may be shown in Table 1.

**Table 1**

| **Successor indicator** | **Note** |
|---|---|
| **00** | A separate MDCP PDU |
| **01** | The 1^{st} PDU in a plurality of MDCP PDUs |
| **11** | A middle PDU in the plurality of MDCP PDUs |
| **10** | The last PDU in the plurality of MDCP PDUs |

As shown in Table 1, when the successor indicator field is "00", it indicates that the MDCP PDU is the separate MDCP PDU. When the successor indicator field is "01", it indicates that the MDCP PDU is the 1^{st} PDU in the plurality of MDCP PDUs. When the successor indicator field is "11", it indicates that the MDCP PDU is the middle PDU in the plurality of MDCP PDUs. When the successor indicator field is "10", it indicates that the MDCP PDU is the last PDU in the plurality of MDCP PDUs.

It may be understood that the value of the successor indicator field and the corresponding meaning shown in Table 1 are merely examples. A length of the successor indicator field, a specific bit value of the successor indicator field, and a meaning corresponding to the bit value are not limited in embodiments of this application.

According to a design of the successor indicator field shown in Table 1, the following separately describes a transmission scenario of an MDCP PDU when the successor indicator field of the MDCP PDU does not include the 00 field and a transmission scenario of an MDCP PDU when the successor indicator field of the MDCP PDU includes the 00 field.

### 1. Transmission scenario of the MDCP PDU when the successor indicator field does not include the 00 field.

When the successor indicator field does not include the 00 field, that is, when the length of the successor indicator field is two bits, the value of the successor indicator field does not include "00" and the corresponding meaning. The value of the successor indicator field includes "01", "10", or "11".

When the MDCP PDU is the 1^{st} MDCP PDU in the plurality of MDCP PDUs, the successor indicator field of the MDCP PDU may be "01". When the MDCP PDU is the middle MDCP PDU in the plurality of MDCP PDUs, the successor indicator field of the MDCP PDU may be "11". When the MDCP PDU is the separate MDCP PDU, or is the last MDCP PDU in the plurality of MDCP PDUs, the successor indicator field of the MDCP PDU may be "10".

### Scenario 1: The plurality of MDCP PDUs are successfully transmitted

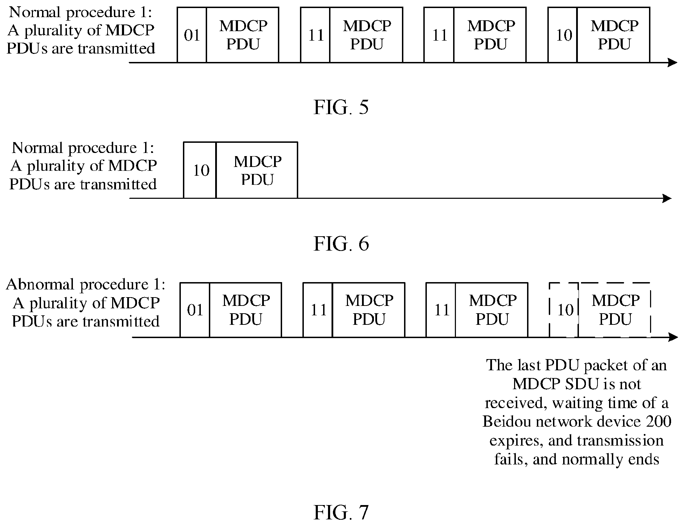

FIG. 5 shows an example of a scenario in which the plurality of MDCP PDUs are successfully transmitted when the successor indicator field does not include the 00 field.

As shown in FIG. 5, the terminal 100 may send four MDCP PDUs to the BeiDou network device 200. In the four MDCP PDUs, an MDCP PDU whose successor indicator field is "01" is the 1^{st} MDCP PDU, an MDCP PDU whose successor indicator field is "11" is the mediate MDCP PDU, and an MDCP PDU whose successor indicator field is "10" is the last PDU packet. In a procedure in which the four MDCP PDUs are normally transmitted, the BeiDou network device 200 may successfully receive the four MDCP PDUs.

It may be understood that, after the terminal 100 sends one MDCP PDU to the BeiDou network device 200, the terminal 100 sends a new MDCP PDU to the BeiDou network device 200 only after the terminal 100 receives an ACK returned by the BeiDou network device 200 for an SLC SDU corresponding to the MDCP PDU.

### Scenario 2: The separate MDCP PDU is successfully transmitted

FIG. 6 shows an example of a scenario in which the separate MDCP PDU is successfully transmitted when the successor indicator field does not include the 00 field.

As shown in FIG. 6, the terminal 100 may send the separate MDCP PDU to the BeiDou network device 200. The successor indicator field of the MDCP PDU is "10". The BeiDou network device 200 may successfully receive the separate MDCP PDU.

### Scenario 3: The last MDCP PDU in the plurality of MDCP PDUs is not received, and waiting time expires

FIG. 7 shows an example of a scenario in which the plurality of MDCP PDUs are unsuccessfully transmitted when the successor indicator field does not include the 00 field.

As shown in FIG. 7, the terminal 100 may send four MDCP PDUs to the BeiDou network device 200. In the four MDCP PDUs, an MDCP PDU whose successor indicator field is "01" is the 1^{st} MDCP PDU, an MDCP PDU whose successor indicator field is "11" is the mediate MDCP PDU, and an MDCP PDU whose successor indicator field is "10" is the last PDU packet. The BeiDou network device 200 does not receive the last MDCP PDU in the four MDCP PDUs sent by the terminal 100. Waiting time of the BeiDou network device 200 expires, the terminal 100 fails to perform transmission, and current transmission normally ends.

When waiting time of the BeiDou network device at the MDCP layer expires, waiting time of the BeiDou network device at the SLC layer for receiving the SLC SDU expires. For example, one SLC SDU includes N SLC PDUs, and maximum time for receiving each SLC PDU by the terminal is first duration, if the BeiDou network device does not receive a next MDCP PDU after second duration after receiving one MDCP PDU at the MDCP layer, it may mean that waiting time of the BeiDou network device at the MDCP layer expires. The second duration may be N pieces of first duration.

### Scenario 4: The last MDCP PDU in the plurality of MDCP PDUs is not received, and waiting time does not expire

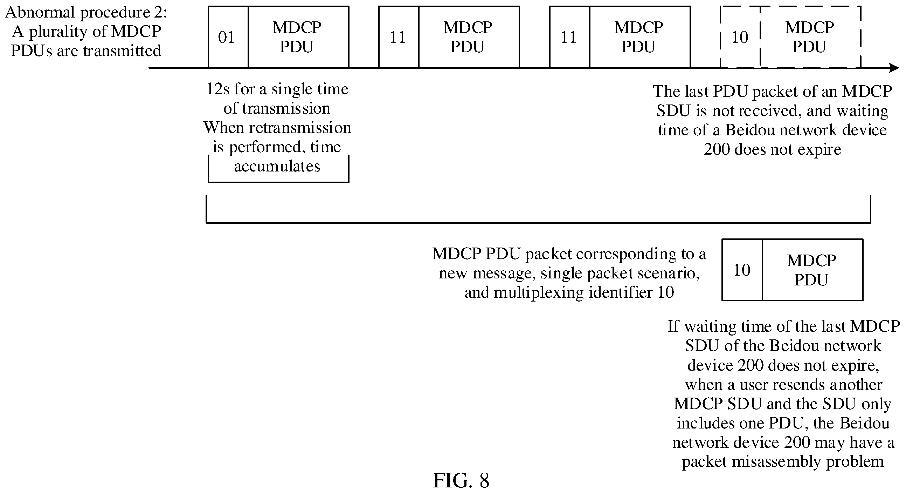

FIG. 8 shows an example of a scenario in which the plurality of MDCP PDUs are unsuccessfully transmitted when the successor indicator field does not include the 00 field.

As shown in FIG. 8, the terminal 100 may send four MDCP PDUs to the BeiDou network device 200. In the four MDCP PDUs, an MDCP PDU whose successor indicator field is "01" is the 1^{st} MDCP PDU, an MDCP PDU whose successor indicator field is "11" is the mediate MDCP PDU, and an MDCP PDU whose successor indicator field is "10" is the last PDU packet. The BeiDou network device 200 does not receive the last MDCP PDU in the four MDCP PDUs sent by the terminal 100. Waiting time of the BeiDou network device 200 does not expire, and the terminal 100 initiates a new service again, that is, sends a new MDCP PDU. The new MDCP PDU is a separate MDCP PDU, and a successor indicator field of the separate MDCP PDU is "10". For example, when the terminal sends an MDCP PDU, an exception occurs and the terminal crashes, and then a user initiates a service on the terminal again. In this case, the BeiDou network device 200 may use the separate MDCP PDU as the last MDCP PDU in the four MDCP PDUs previously sent by the terminal 100. Then, the BeiDou network device 200 combines the separate MDCP PDU and three MDCP PDUs in the four MDCP PDUs received last time into one MDCP SDU. In this way, the BeiDou network device 200 incorrectly reassembles the MDCP SDU packet.

### 2. Transmission scenario of the MDCP PDU when the successor indicator field includes the 00 field.

The value of the successor indicator field includes "00", "01", "10", or "11". For a meaning corresponding to the value of the successor indicator field, refer to the descriptions in Table 1.

### Scenario 5: The last PDU in the plurality of MDCP PDUs is not received, and waiting time does not expire

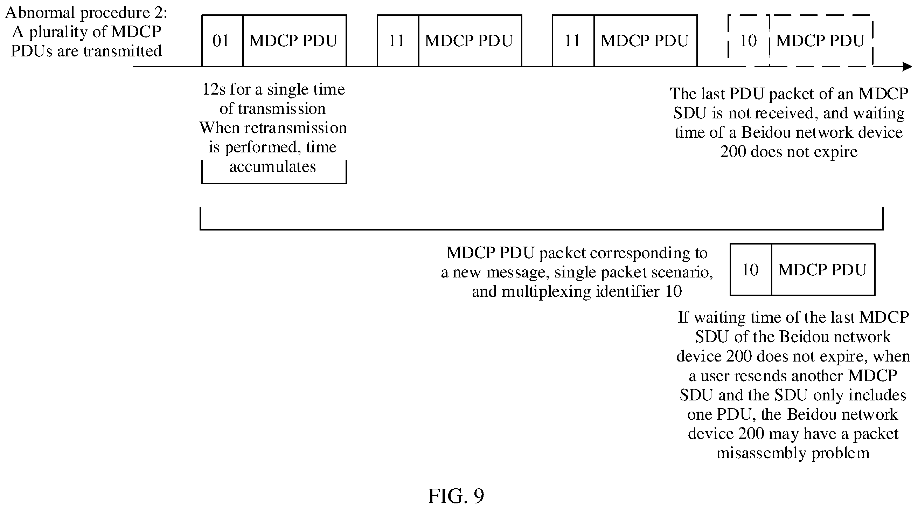

FIG. 9 shows an example of a scenario in which the plurality of MDCP PDUs are unsuccessfully transmitted when the successor indicator field does not include the 00 field.

As shown in FIG. 9, the terminal 100 may send four MDCP PDUs to the BeiDou network device 200. In the four MDCP PDUs, an MDCP PDU whose successor indicator field is "01" is the 1^{st} MDCP PDU, an MDCP PDU whose successor indicator field is "11" is the mediate MDCP PDU, and an MDCP PDU whose successor indicator field is "10" is the last PDU packet. The BeiDou network device 200 does not receive the last MDCP PDU in the four MDCP PDUs sent by the terminal 100. Waiting time of the BeiDou network device 200 does not expire, the terminal 100 sends a separate MDCP PDU again, and a successor indicator field of the separate MDCP PDU is "00". The BeiDou network device 200 may determine, based on the successor indicator field "00" of the MDCP PDU, that the MDCP PDU is a separate MDCP PDU. In this way, the BeiDou network device 200 does not reassemble the separate MDCP PDU and an MDCP PDU received by the BeiDou network device 200 last time into an MDCP SDU. That is, the BeiDou network device 200 does not have a packet misassembly problem.

**The following specifically describes a protocol processing procedure of data at an MDCP layer and an SLC layer in a BeiDou communication system 10.**

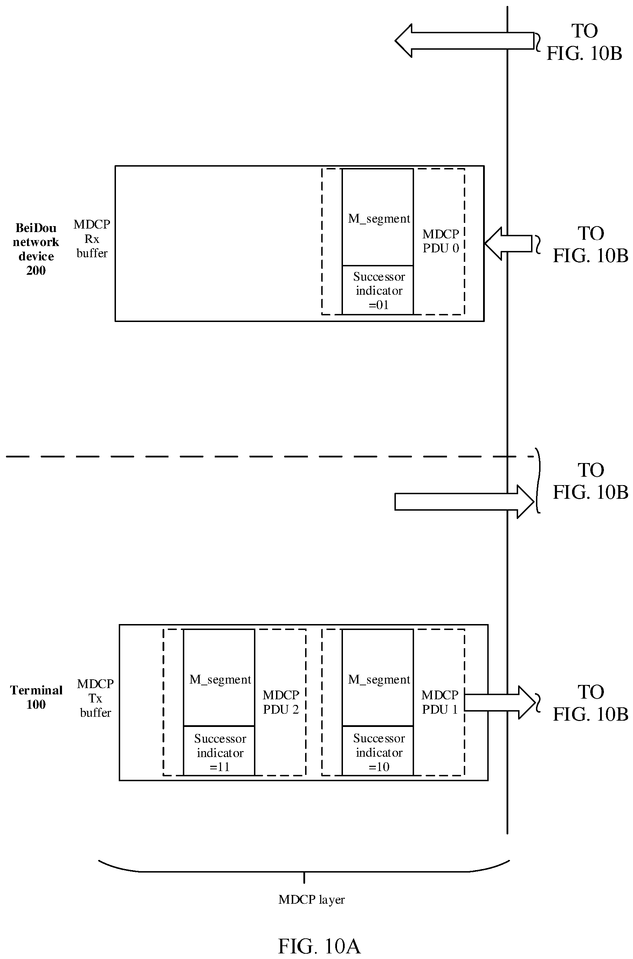

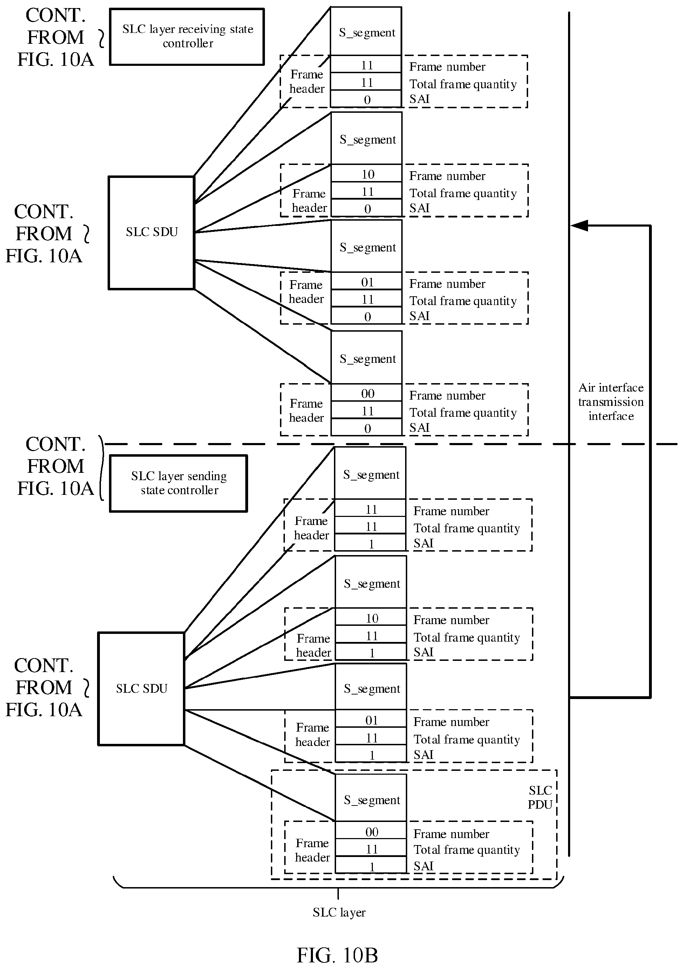

FIG. 10A and FIG. 10B are a schematic flowchart of protocol processing of data at an MDCP layer and an SLC layer in a BeiDou communication system 10 according to an embodiment of this application.

### 1. An encapsulation protocol process of the terminal 100 for sending data at the MDCP layer

As shown in FIG. 10A and FIG. 10B, at the MDCP layer, the terminal 100 may divide the MDCP SDU to which the (padding) data and the redundant length indicator field are added into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field. The terminal 100 may store the MDCP PDU obtained through division into an MDCP transmit buffer (MDCP Tx buffer) in a first in first out order. A data length of the successor indicator field may occupy two bits (bits). A meaning of the value of the successor indicator field may be shown in Table 1.

For example, the terminal 100 may divide the MDCP SDU to which the padding (padding) data and the redundant length indicator field are added into three MDCP PDUs. The three MDCP PDUs are sequentially an MDCP PDU 0, an MDCP PDU 1, and an MDCP PDU 2 in an order from a high bit to a low bit. Because the MDCP PDU 0 is a start MDCP PDU in the current MDCP SDU, the terminal 100 may set a value of a successor indicator field in the MDCP PDU 0 to "01". Because the MDCP PDU 1 is a mediate MDCP PDU in the current MDCP SDU, the terminal 100 may set a value of a successor indicator field in the MDCP PDU 1 to "11". Because the MDCP PDU 2 is the last MDCP PDU in the current MDCP SDU, the terminal 100 may set a value of a successor indicator field in the MDCP PDU 2 to "10".

For another example, the terminal 100 may divide the MDCP SDU to which the padding (padding) data and the redundant length indicator field are added into two MDCP PDUs. The two MDCP PDUs are sequentially an MDCP PDU 0 and an MDCP PDU 1 in an order from a high bit to a low bit. Because the MDCP PDU 0 is a start MDCP PDU in the current MDCP SDU, the terminal 100 may set a value of a successor indicator field in the MDCP PDU 0 to "01". Because the MDCP PDU 1 is the last MDCP PDU in the current MDCP SDU, the terminal 100 may set a value of a successor indicator field in the MDCP PDU 1 to "10".

For another example, the terminal 100 may use the MDCP SDU to which the padding (padding) data and the redundant length indicator field are added as one MDCP PDU 0. Because the MDCP PDU 0 is the unique MDCP PDU in the current MDCP SDU, the terminal 100 may set a value of a successor indicator field in the MDCP PDU 0 to "00".

In embodiments of this application, because a capability of a bottom layer of the terminal is limited, a data length of one physical frame is limited, and a length of data that may be sent by one SLC layer is limited by the length of the physical frame, the SLC layer needs to divide an SLC SDU into a plurality of SLC PDUs. A data length of the SLC PDU limits a length of data sent by the MDCP layer. Therefore, the MDCP layer also needs to divide one MDCP SDU into one or more MDCP PDUs.

### 2. An encapsulation protocol process of the terminal 100 for sending data at the SLC layer

At the SLC layer, the terminal 100 may control, through an SLC layer sending state controller at the SLC layer, an SLC PDU sending policy of the SLC layer based on a receiving feedback (for example, an ACK) sent by the BeiDou network device 200, and the SLC PDU sending policy includes initial transmission and retransmission of an SLC PDU. The terminal 100 may obtain, through an inter-layer interface, an MDCP PDU delivered by the MDCP layer, and use the MDCP PDU as an SLC SDU. After sending a previous SLC SDU to the BeiDou network device 200 and determining that the BeiDou network device 200 successfully receives the previous SLC SDU, the terminal 100 obtains a next MDCP PDU from the MDCP layer as a next SLC SDU, and sends the next MDCP PDU to the BeiDou network device 200.

Optionally, in a possible implementation, the terminal 100 divides the MDCP SDU into a plurality of MDCP PDUs at the MDCP layer, and the terminal 100 may transmit the plurality of MDCP PDUs together to the SLC layer of the terminal 100.

For example, the terminal 100 may divide the MDCP SDU to which padding (padding) data and a redundant length indicator field are added into three MDCP PDUs. The three MDCP PDUs are sequentially an MDCP PDU 0, an MDCP PDU 1, and an MDCP PDU 2 in an order from a high bit to a low bit. At the SLC layer, the terminal 100 first obtains, through an inter-layer interface, the MDCP PDU 0 delivered by the MDCP layer, and the terminal 100 may send the MDCP PDU 0 as the 1^{st} SLC SDU of the SLC layer in the current packet transmission process to the BeiDou network device 200. After the terminal 100 determines that data of the 1^{st} SLC SDU has been sent to the BeiDou network device 200, the terminal 100 may obtain the MDCP PDU 1 from the MDCP layer, and send the MDCP PDU 1 as the 2^{nd} SLC SDU in the current packet transmission process to the BeiDou network device 200. After the terminal 100 determines that data of the 2^{nd} SLC SDU has been sent to the BeiDou network device 200, the terminal 100 may obtain the MDCP PDU 2 from the MDCP layer, and send the MDCP PDU 2 as the last SLC SDU in the current packet transmission process to the BeiDou network device 200.

The foregoing example is only used to explain this application and should not be construed as a limitation.

At the SLC layer, the terminal 100 may segment the SLC SDU into one or more pieces of SLC segment data (S_segment) with a fixed length, and add frame header information to a header of each S_segment, to obtain an SLC PDU. The frame header information includes an SAI field, a total frame quantity field, and a frame sequence number field.
(1) The SAI field may occupy one bit. A value of the SAI field may be "0" or "1". The terminal 100 may determine whether an SLC PDU to be currently sent belongs to an SLC SDU that has not been sent. If the SLC PDU belongs to the SLC SDU, the terminal 100 may set a value of an SAI field in the SLC PDU to be different from a value of an SAI field in an SLC PDU in a previous SLC SDU session (which includes an SLC SDU initial transmission session or an SLC SDU retransmission session). If the SLC PDU does not belong to the SLC SDU, the terminal 100 may set a value of an SAI field in the SLC PDU to be the same as a value of an SAI field in an SLC PDU in a previous SLC SDU session. When the value of the SAI field in the SLC PDU is the same as the value of the SAI field in the SLC PDU in the previous SLC SDU session, it indicates that the SLC PDU is retransmitted data.

It may be understood that the SAI field has a preset initial value, and an SAI field of the 1^{st} SLC SDU sent by the terminal 100 to the BeiDou network device 200 is the preset initial value. If the SAI field of the 1^{st} SLC SDU received by the BeiDou network device 200 is not the preset initial value, the BeiDou network device 200 may directly discard the SLC SDU. The preset initial value of the SAI field in the SLC SDU may be 0, or may be another value. The preset initial value of the SAI field is not limited in this application.

For example, the terminal 100 needs to transmit three SLC SDUs in an entire application layer packet transmission process. Each SLC SDU may include four SLC PDUs. Values of SAI fields of four SLC PDUs in the 1^{st} SLC SDU may be all "0". Values of SAI fields of four SLC PDUs in the 2^{nd} SLC SDU may be all "1". Values of SAI fields of four SLC PDUs in the 3^{rd} SLC SDU may be all "0".

The foregoing example is only used to explain this application and should not be construed as a limitation.

(2) The total frame quantity field may indicate a total quantity of SLC PDUs included in an SLC SDU to which the SLC PDU belongs. When one SLC SDU in the BeiDou communication system 10 may be divided into a maximum of four pieces of SLC segment data (S_segment) with a fixed length, the total frame quantity field may occupy two bits.

For example, when the SLC SDU includes only one SLC PDU, a value of a total frame quantity field of the unique SLC PDU in the SLC SDU may be "00". When the SLC SDU includes two SLC PDUs, a value of a total frame quantity field of the two SLC PDUs in the SLC SDU may be "01". When the SLC SDU includes three SLC PDUs, a value of a total frame quantity field of the three SLC PDUs in the SLC SDU may be "10". When the SLC SDU includes four SLC PDUs, a value of a total frame quantity field of the four SLC PDUs in the SLC SDU may be "11".

The foregoing example is only used to explain this application and should not be construed as a limitation.

(3) The frame sequence number field may indicate a sequence number of the SLC PDU in the SLC SDU to which the SLC PDU belongs. When one SLC SDU in the BeiDou communication system 10 may be divided into a maximum of four pieces of SLC segment data (S_segment) with a fixed length, the frame sequence number field may occupy two bits.

For example, when the SLC SDU includes only one SLC PDU, a value of a frame sequence number field of the unique SLC PDU in the SLC SDU may be "00". When the SLC SDU includes two SLC PDUs, a value of a frame sequence number field of the 1^{st} SLC PDU in the SLC SDU may be "00", and a value of a frame sequence number field of the 2^{nd} SLC PDU in the SLC SDU may be "01". When the SLC SDU includes three SLC PDUs, a value of a frame sequence number field of the 1^{st} SLC PDU in the SLC SDU may be "00", a value of a frame sequence number field of the 2^{nd} SLC PDU in the SLC SDU may be "01", and a value of a frame sequence number field of the 3^{rd} SLC PDU in the SLC SDU may be "10". When the SLC SDU includes four SLC PDUs, a value of a frame sequence number field of the 1^{st} SLC PDU in the SLC SDU may be "00", a value of a frame sequence number field of the 2^{nd} SLC PDU in the SLC SDU may be "01", a value of a frame sequence number field of the 3 ^{rd} SLC PDU in the SLC SDU may be "10", and a value of a frame sequence number field of the 4^{th} SLC PDU in the SLC SDU may be "11".

The foregoing example is only used to explain this application and should not be construed as a limitation.

### 3. A protocol parsing process of the BeiDou network device 200 for receiving data at the SLC layer

At the SLC layer, after receiving the SLC PDU of the terminal 100, the BeiDou network device 200 may determine, based on frame header information of the SLC PDU, whether all SLC PDUs in one SLC SDU are received. If all the SLC PDUs in one SLC SDU are received, the BeiDou network device 200 may sequentially splice the received one or more SLC PDUs into one SLC SDU in ascending order of values of frame sequence number fields. If not all the SLC PDUs in one SLC SDU are received, after an SLC layer receive window ends, the BeiDou network device 200 may send feedback information (for example, an ACK) to indicate the terminal 100 to retransmit an SLC PDU that is not received. After splicing the SLC SDU, the BeiDou network device 200 may report the SLC SDU to the MDCP layer as an MDCP PDU through an inter-layer interface.

The BeiDou network device 200 may control, through an SLC layer receiving state controller at the SLC layer, a sending policy of feedback information (for example, an ACK) of the SLC layer and splicing of the SLC PDU based on the SAI field of the SLC PDU. Duration of the SLC layer receiving state controller is maximum retransmission time of the SLC PDU on the terminal 100.

For example, an SAI value of the 1^{st} SLC PDU in the 1^{st} SLC SDU received by the BeiDou network device 200 may be "0", a total frame quantity value is "11", and a frame sequence number is "00". An SAI value of the 2^{nd} SLC PDU in the 1^{st} SLC SDU may be "0", a total frame quantity value is "11", and a frame sequence number is "01". An SAI value of the 3^{rd} SLC PDU in the 1^{st} SLC SDU may be "0", a total frame quantity value is "11", and a frame sequence number is "10". An SAI value of the 4^{th} SLC PDU in the 1^{st} SLC SDU may be "0", a total frame quantity value is "11", and a frame sequence number is "11". The BeiDou network device 200 may splice the four SLC PDUs into the 1^{st} SLC SDU in ascending order of frame sequence numbers, and report the 1^{st} SLC SDU to the MDCP layer as an MDCP PDU 0 of the MDCP layer. The BeiDou network device 200 may store the MDCP PDU 0 in an MDCP layer receive buffer (MDCP Rx buffer). A value of a successor indicator field in the MDCP PDU 0 is "01".

An SAI value of the 1^{st} SLC PDU in the 2^{nd} SLC SDU received by the BeiDou network device 200 may be "1", a total frame quantity value is "11", and a frame sequence number is "00". An SAI value of the 2^{nd} SLC PDU in the 2^{nd} SLC SDU may be "1", a total frame quantity value is "11", and a frame sequence number is "01". An SAI value of the 3^{rd} SLC PDU in the 2^{nd} SLC SDU may be "1", a total frame quantity value is "11", and a frame sequence number is "10". An SAI value of the 4^{th} SLC PDU in the 2^{nd} SLC SDU may be "1", a total frame quantity value is "11", and a frame sequence number is "11". The BeiDou network device 200 may splice the four SLC PDUs into the 2^{nd} SLC SDU in ascending order of frame sequence numbers, and report the 2^{nd} SLC SDU to the MDCP layer as an MDCP PDU 1 at the MDCP layer. The BeiDou network device 200 may store the MDCP PDU 1 in an MDCP layer receive buffer (MDCP Rx buffer). A value of a successor indicator field in the MDCP PDU 1 is "10".

An SAI value of the 1^{st} SLC PDU in the 3^{rd} SLC SDU received by the BeiDou network device 200 may be "0", a total frame quantity value is "11", and a frame sequence number is "00". An SAI value of the 2^{nd} SLC PDU in the 3^{rd} SLC SDU may be "0", a total frame quantity value is "11", and a frame sequence number is "01". An SAI value of the 3^{rd} SLC PDU in the 3^{rd} SLC SDU may be "0", a total frame quantity value is "11", and a frame sequence number is "10". An SAI value of the 4^{th} SLC PDU in the 3^{rd} SLC SDU may be "0", a total frame quantity value is "11", and a frame sequence number is "11". The BeiDou network device 200 may splice the four SLC PDUs into the 3^{rd} SLC SDU in ascending order of frame sequence numbers, and report the 3^{rd} SLC SDU to the MDCP layer as an MDCP PDU 2 at the MDCP layer. The BeiDou network device 200 may store the MDCP PDU 2 in an MDCP layer receive buffer (MDCP Rx buffer). A value of a successor indicator field in the MDCP PDU 2 is "11".

The foregoing example is only used to explain this application and should not be construed as a limitation.

### 4. A protocol parsing process of the BeiDou network device 200 for receiving data at the MDCP layer

At the MDCP layer, after receiving all MDCP PDUs of one MDCP SDU sent by the terminal 100, the BeiDou network device 200 may aggregate a plurality of MDCP PDUs in a receiving time sequence based on a successor indicator field in the MDCP PDU, to obtain the MDCP SDU.

After the BeiDou network device 200 obtains, from the SLC layer, an MDCP PDU whose value of a successor indicator field is "11", the BeiDou network device 200 may extract all MDCP PDUs from an MDCP Rx buffer, splice the MDCP PDUs based on values of successor indicator fields and a receiving time sequence, and remove a redundant indicator field and padding data after the splicing, to obtain the MDCP SDU. The BeiDou network device 200 may report the MDCP SDU to the application layer through an inter-layer interface as an application layer packet.

**The following describes a segmentation processing procedure of the MDCP SDU at the MDCP layer during inbound.**

The following uses an example in which the terminal 100 segments one MDCP SDU into one or more MDCP PDUs for description. That the terminal 100 segments one MDCP SDU into one or more MDCP PDUs may include the following steps.
1. Compressed and encrypted data is applied to data at the application layer of the terminal 100, and is used as the MDCP SDU at the MDCP layer. A data size of the MDCP SDU may be denoted as DataSizeOfMsdu.
2. The terminal 100 may calculate, based on a transmission capability provided by the SLC layer, a segment quantity SegmentNumOfMsdu of one MDCP SDU, and a data part of each MDCP PDU and padding (padding) data that are obtained by segmenting the MDCP SDU. Herein, the transmission capability of the SLC layer is learned of from the PHY layer through an inter-layer transmission interface. The transmission capability of the SLC layer means a specific data length of one SLC PDU that can be transmitted by the SLC layer. The data length of one SLC PDU that can be transmitted by the SLC layer is determined based on a data length of one physical frame at the PHY layer.
3. The terminal 100 segments, based on the segment quantity SegmentNumOfMsdu and a sequence number of the MDCP PDU, the MDCP SDU into a plurality of MDCP PDUs after adding padding (padding) data and a redundant length indicator field to the MDCP SDU, where the redundant length indicator field indicates a data length of the padding (padding) data. Then, the terminal 100 determines a successor indicator of each MDCP PDU, and finally forms a complete MDCP PDU. The successor indicator needs to indicate the 1^{st} MDCP PDU, a middle MDCP PDU, and the last MDCP PDU in the plurality of MDCP PDUs. If current SegmentNumOfMsdu=1, the successor indicator needs to indicate that the current MDCP PDU is a separate MDCP PDU. If SegmentNumOfMsdu=4, the successor indicator needs four states and two bits.
4. The terminal 100 transfers the MDCP PDU to the SLC layer through an inter-layer interface, and uses the MDCP PDU as an SLC SDU of the SLC layer.

**The following describes a reassembly processing procedure of the MDCP PDU at the MDCP layer during inbound.**

The following uses an example in which the BeiDou network device 200 reassembles one or more received MDCP PDUs into one MDCP SDU for description. That the BeiDou network device 200 reassembles one or more MDCP PDUs into one MDCP SDU may include the following steps.
1. At the SLC layer, the BeiDou network device 200 may calculate a length of one MDCP PDU data packet based on a frame sequence number and a total frame quantity that are carried in the SLC PDU received at the SLC layer and a frame length of one SLC PDU obtained through blind decoding. The BeiDou network device 200 reports the calculated length of the one MDCP PDU data packet to the MDCP layer.

Specifically, a length of an inbound physical layer frame is a fixed frame length of a limited set. In this way, when the physical layer of the BeiDou network device 200 successfully receives the inbound physical layer frame (where decoding succeeds after trying each frame length), the corresponding physical layer frame length is learned of. After the SLC layer receives a plurality of SLC frames (where each SLC frame corresponds to one physical layer frame), the SLC notifies the MDCP layer of the length of the SLC SDU, namely, the MDCP PDU.

Then, the BeiDou network device 200 may obtain a length after packet assembly based on a length of each MDCP PDU. Then, a bit of a redundant length indicator is parsed, to obtain a padding length. In this way, a padding bit may be removed, to obtain data of the MDCP SDU.

2. At the MDCP layer, the BeiDou network device 200 combines one or more received MDCP PDUs into one complete MDCP SDU data packet based on a successor indicator field of each MDCP PDU.

If the successor indicator field of the MDCP PDU indicates that the MDCP PDU is a separate MDCP PDU, the BeiDou network device 200 uses the separate MDCP PDU as one MDCP SDU data packet.

If the successor indicator bit of the current MDCP PDU indicates that the current MDCP PDU is neither the 1^{st} MDCP PDU in the plurality of MDCP PDUs nor a separate MDCP PDU (namely, the last MDCP PDU or a mediate MDCP PDU in the plurality of MDCP PDUs), the BeiDou network device 200 sequentially performs packet assembly on the currently received MDCP PDU after removing the successor indicator field and a previously received MDCP PDU from which the successor indicator field is removed. Until the successor indicator field of the received MDCP PDU indicates that the current MDCP PDU is the last MDCP PDU, the BeiDou network device 200 removes the successor indicator field from the last MDCP PDU, and performs packet assembly on the last MDCP PDU and data obtained after packet assembly, to finally obtain an MDCP SDU data packet.

3. The BeiDou network device 200 transfers the MDCP SDU to the application layer for processing (for example, decryption and decompression).

It may be understood that the terminal may perform retransmission during inbound. For example, in a transmission process, after sending an SLC PDU 0 to the BeiDou network device 200, the terminal 100 sends the SLC PDU 0 to the BeiDou network device 200 again. The BeiDou network device 200 needs to determine whether the received SLC PDU is retransmitted; and if the received SLC PDU is retransmitted, discards the retransmitted SLC PDU at the SLC layer. After receiving all MDCP PDUs at the MDCP layer, the BeiDou network device 200 performs packet assembly on the MDCP PDUs into an MDCP SDU packet, parses out a redundant length indicator field in the MDCP SDU, removes padding data, and then transfers the MDCP SDU packet to the application layer for subsequent decryption and decompression operations.

Table 2 shows an example in which a separate MDCP PDU is reassembled into one MDCP SDU.

**Table 2**

| Packet communication frame-information packet | | |
|---|---|---|
| PHY | Code data (code data) | 512 bits |
| | Check bit | 24 bits |
| SLC | Frame header | 64 bits |
| | S_segment | 424 bits |
| | Quantity of frames | One frame (namely, one SLC PDU) |
| | SDU | 424 bits |
| MDCP | Successor indicator | Two bits |
| | M_segment | 422 bits |
| | Segment sequence number | 1 |
| | Redundant length indicator | Eight bits |
| | Padding | 237 bits |
| | SDU | 177 bits |

As shown in Table 2, an example in which the BeiDou network device 200 forms one MDCP SDU by using a separate MDCP PDU is used. The BeiDou network device 200 may calculate a length of an MDCP PDU packet based on a length of code data (namely, code data shown in FIG. 3A, FIG. 3B, and FIG. 3C), and then may obtain a length of the MDCP SDU based on the length of the MDCP PDU. As shown in Table 2, an example in which the code data (which includes a code block (code block) and the check bit) is 512 bits is used. A length of one SLC PDU is also a length of one code block, that is, a length of the code data minus a length of the check bit (that is, 512 bits-24 bits) is 488 bits. If a length of a frame header in the SLC PDU is 64 bits, a length of an S_segment at the SLC layer is (448 bits-64 bits)=424 bits. When one SLC SDU is divided into only one S_segment, the length of the SLC SDU is the length of the MDCP PDU, namely, 424 bits. The length of the MDCP PDU is also the length of the SLC SDU. When the MDCP SDU includes only one MDCP PDU (which includes a successor indicator and an M_segment), padding (237 bits) may be obtained by removing a length of the successor indicator (two bits), a length of the redundant length indicator (eight bits), and a length of the MDCP SDU (which is assumed to be 177 bits) from the length of the MDCP PDU.

It may be understood that Table 2 is merely an example, and does not constitute a limitation on this embodiment of this application.

Table 3 shows an example of reassembly of dividing one MDCP SDU into a plurality of MDCP PDUs.

**Table 3**

| Packet communication frame-information packet | | | |
|---|---|---|---|
| PHY | Bit length before encoding | 512 bits | |
| | Check bit | 24 bits | |
| SLC | Frame header | 64 bits | |
| | S_segment | 424 bits | 424 bits |
| | Quantity of frames | Four frames (namely, one SLC PDU) | One frame (namely, four SLC PDUs) |
| | SDU | 1696 bits | 424 bits |
| MDCP | Successor indicator | Two bits | Two bits |
| | M_segment | 1694 bits | 422 bits |
| | Segment sequence number | 1 | 2 |
| | Redundant length indicator | Eight bits | |
| | Padding | Two bits | |
| | SDU | 2106 bits | |

As shown in Table 3, an example in which the terminal 100 divides one MDCP SDU into two MDCP PDUs is used for description. As shown in Table 3, the terminal 100 receives one data packet at the MDCP layer, and uses the data packet as one MDCP SDU, and a data length of the data packet is 2106 bits. A data length of the code data (namely, the code data shown in FIG. 3A, FIG. 3B, and FIG. 3C) obtained by the terminal 100 from the physical layer is 512 bits, and a length of the check bit is 24 bits. Therefore, the terminal 100 may determine a transmission capability that can be provided by the SLC layer, that is, a data length of one SLC PDU that can be transmitted by the SLC layer is the data length of the code data (namely, the code data shown in FIG. 3A, FIG. 3B, and FIG. 3C) minus the length of the check bit and a length of an SLC PDU frame header, namely, 424 bits. Then, the terminal 100 may determine a quantity of segments of the MDCP SDU based on the data length of one SLC PDU, that is, the MDCP SDU may be divided into two MDCP PDUs, a data length of each MDCP PDU (where a data length of the 1 ^{st} MDCP PDU is 1694, and a length of the 2^{nd} MDCP PDU is 422), and a padding length (for example, two bits).

It may be understood that Table 3 is merely an example, and does not constitute a limitation on this embodiment of this application.

**The following describes a protocol encapsulation architecture of outbound data of a BeiDou communication system 10 according to an embodiment of this application.**

FIG. 11A-1, FIG. 11A-2, and FIG. 11A-3 are a schematic diagram of a protocol encapsulation architecture of outbound data of a BeiDou communication system 10 according to an embodiment of this application.

As shown in FIG. 11A-1, FIG. 11A-2, and FIG. 11A-3, a BeiDou short message transport protocol layer of a BeiDou network device 200 may be an application layer (application layer protocol), a message data convergence protocol (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short message converged communication platform 24. The BeiDou ground transceiver station 22 may be configured to be responsible for protocol processing at the PHY layer. The BeiDou central station 23 may be configured to be responsible for protocol processing at the SLC layer and the MDCP layer. The BeiDou short message converged communication platform 24 may be configured to be responsible for protocol processing at the APP layer.

When the BeiDou network device 200 sends data to a terminal 100, a working procedure of the BeiDou short message transport protocol of the BeiDou network device 200 may be as follows:

At the APP layer, the BeiDou network device 200 may compress original data into compressed data by using a compression algorithm, and add a compression indicator field before the compressed data, where the compression indicator field may indicate a compression algorithm type of the compressed data. Then, the BeiDou network device 200 may encrypt the compressed data to obtain encrypted data, and add an encryption algorithm field to a header of the encrypted data, where the encryption algorithm field indicates an encryption algorithm type of the encrypted data. The BeiDou network device 200 may encapsulate the encrypted data, the compression indicator field, and an encryption indicator field into an application layer packet and deliver the application layer packet to the MDCP layer. The application layer packet may include a packet header and packet data. The packet header may include the compression indicator field, the encryption indicator field, and the like. The packet data includes the foregoing encrypted data.

Optionally, in a possible implementation, the BeiDou network device 200 divides an MDCP SDU into a plurality of MDCP PDUs at the MDCP layer, and the BeiDou network device 200 may transmit the plurality of MDCP PDUs together to the SLC layer of the BeiDou network device 200.

At the MDCP layer, the BeiDou network device 200 may obtain, through an inter-layer interface, an application layer packet delivered by the APP layer, and use the application layer packet as one MDCP SDU. At the MDCP layer, the BeiDou network device 200 may divide one MDCP SDU into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field. The successor indicator field may indicate that the current MDCP PDU is a start MDCP PDU, a mediate MDCP PDU, or the last MDCP PDU in continuously sent MDCP PDUs, or is a separately sent MDCP PDU.

At the SLC layer, the BeiDou network device 200 may obtain, through an inter-layer interface, an MDCP PDU delivered by the MDCP layer, and use the MDCP PDU as an SLC SDU. At the SLC layer, the BeiDou network device 200 may segment the SLC SDU into one or more pieces of (a maximum quantity is 4) SLC segment data (S_segment) with a fixed length, and add frame header information to a header of each S_segment, to obtain an SLC PDU.

At the PHY layer, the BeiDou network device 200 may obtain, through an inter-layer interface, the SLC PDU delivered by the SLC layer. The BeiDou network device 200 may obtain SLC PDUs of one or more users from the SLC layer. The BeiDou network device 200 may splice SLC PDUs of a plurality of users, then add a frame header (for example, a version number) of a physical frame to be used as a code block (code block) at the PHY layer, add a check bit (for example, a cyclic redundancy check (cyclic redundancy check, CRC) code) to a tail of the code block, and perform encoding (for example, polar encoding) on the code block and the CRC code. The encoded physical frame and a reserved segment may form code data of a message branch (S2C_d branch) of a fixed-length physical slot. The BeiDou network device 200 may separately place a plurality of SLC PDUs of one user into different physical frames. Then, the BeiDou network device 200 forms pilot code data, namely, outbound data, by using the code data of the S2C_d branch and pilot information of a pilot branch (S2C_p branch). The BeiDou network device 200 may send the outbound data to the BeiDou short message satellite 21, and the BeiDou short message satellite 21 forwards, through relay, the data to the terminal 100.

It may be understood that the pilot information of the S2C_p branch is related to a satellite beam. When a satellite beam number is known information, the pilot information of the S2C_p branch is also known and does not need to be decoded. However, the code data of the S2C_d branch needs to be decoded.

**The following describes a protocol parsing architecture of outbound data of a BeiDou communication system 10 according to an embodiment of this application.**

FIG. 11B-1, FIG. 11B-2, and FIG. 11B-3 are a schematic diagram of a protocol parsing architecture of outbound data of a BeiDou communication system 10 according to an embodiment of this application.

As shown in FIG. 11B-1, FIG. 11B-2, and FIG. 11B-3, a BeiDou short message transport protocol layer of a terminal 100 may be divided into an application layer (application layer protocol), a message data convergence protocol (message data convergence protocol, MDCP) layer, a satellite link control (satellite link control protocol, SLC) layer, and a physical (physical layer protocol, PHY) layer.

When the terminal 100 receives data sent by a BeiDou network device, a working procedure of the BeiDou short message transport protocol layer of the terminal 100 may be as follows:

At the PHY layer, the terminal 100 may obtain modulated and spread pilot code data sent by the BeiDou network device 200. The terminal 100 may perform despreading on the received spread modulated data (spread+modulated data), to obtain modulated data (modulated data). Then, the terminal 100 may demodulate the modulated data to obtain pilot code data (pilot+data). Then, the terminal 100 may remove pilot information from the pilot code data, to obtain code data (code data). Then, the terminal 100 may decode the code data, and verify integrity of a code block (code block) by using check data in a check bit field. If the code block is complete, the terminal 100 may extract the code block (code block), and deliver the code block to the SLC layer through an inter-layer interface, and uses the code block as an SLC PDU of the SLC layer.

Herein, the pilot code data is the outbound data sent by the BeiDou network device 200, and the outbound data includes code data of an S2C_d branch and pilot information of a pilot branch (S2C_p branch).

At the SLC layer, the terminal 100 may splice SLC PDUs belonging to a same SLC SDU into one SLC SDU based on frame header information of the SLC PDU. The terminal 100 may deliver the SLC SDU to the MDCP layer through an inter-layer interface, and uses the SLC SDU as an MDCP PDU of the MDCP layer.

At the MDCP layer, the terminal 100 may splice all MDCP PDUs belonging to a same MDCP SDU into one MDCP SDU. The terminal 100 may deliver the MDCP SDU to the APP layer through an inter-layer interface, and use the MDCP SDU as an application layer packet received by the APP layer.

At the APP layer, the terminal 100 may decrypt and decompress an application layer packet based on a packet header of the application layer packet, to obtain original data.

In embodiments of this application, the foregoing protocol processing process is merely an example for description, and a specific operation of protocol processing is not limited in this application.

**The following describes a segmentation processing procedure of the MDCP SDU at the MDCP layer during outbound.**

The following uses an example in which the BeiDou network device 200 segments one MDCP SDU into one or more MDCP PDUs for description. That the BeiDou network device 200 segments one MDCP SDU into one or more MDCP PDUs may include the following steps.
1. Compressed and encrypted data is applied to data at the application layer of the BeiDou network device 200, and is used as the MDCP SDU at the MDCP layer. A data size of the MDCP SDU may be denoted as DataSizeOfMsdu.
2. The BeiDou network device 200 may calculate, based on a transmission capability provided by the SLC layer, a segment quantity SegmentNumOfMsdu of one MDCP SDU, and a data part, of each MDCP PDU, that is obtained by segmenting the MDCP SDU.
3. The BeiDou network device 200 determines a successor indicator of each MDCP PDU based on the segment quantity SegmentNumOfMsdu and a sequence number of the MDCP PDU, and finally forms a complete MDCP PDU. The successor indicator needs to indicate the 1^{st} MDCP PDU, a middle MDCP PDU, and the last MDCP PDU in the plurality of MDCP PDUs. If current SegmentNumOfMsdu=1, the successor indicator needs to indicate that the current MDCP PDU is a separate MDCP PDU. If SegmentNumOfMsdu=4, the successor indicator needs four states and two bits.
4. The BeiDou network device 200 transfers the MDCP PDU to the SLC layer through an inter-layer interface, and uses the MDCP PDU as an SLC SDU of the SLC layer.

**The following describes a reassembly processing procedure of the MDCP PDU at the MDCP layer during outbound.**

The following uses an example in which the terminal 100 reassembles one or more received MDCP PDUs into one MDCP SDU for description. That the terminal 100 reassembles one or more MDCP PDUs into one MDCP SDU may include the following steps.
1. At the SLC layer, the terminal 100 may calculate a length of one MDCP PDU data packet based on a frame sequence number and a total frame quantity that are carried in the SLC PDU received at the SLC layer and a frame length of one SLC PDU. The terminal 100 reports the calculated length of the one MDCP PDU data packet to the MDCP layer.
2. At the MDCP layer, the terminal 100 combines one or more received MDCP PDUs into one complete MDCP SDU data packet based on a successor indicator field of each MDCP PDU.

If the successor indicator field of the MDCP PDU indicates that the MDCP PDU is a separate MDCP PDU, the terminal 100 uses the separate MDCP PDU as one MDCP SDU data packet.

If the successor indicator bit of the current MDCP PDU indicates that the current MDCP PDU is neither the 1^{st} MDCP PDU in the plurality of MDCP PDUs nor a separate MDCP PDU (namely, the last MDCP PDU or a mediate MDCP PDU in the plurality of MDCP PDUs), the terminal 100 sequentially performs packet assembly on the currently received MDCP PDU after removing the successor indicator field and a previously received MDCP PDU from which the successor indicator field is removed. Until the successor indicator field of the received MDCP PDU indicates that the current MDCP PDU is the last MDCP PDU, the terminal 100 removes the successor indicator field from the last MDCP PDU, and performs packet assembly on the last MDCP PDU and data obtained after packet assembly, to finally obtain an MDCP SDU data packet.

3. The terminal 100 transfers the MDCP SDU to the application layer for processing (for example, decryption and decompression).

The following describes a data transmission control method in a BeiDou communication system according to an embodiment of this application.

FIG. 11C is a schematic flowchart of a data transmission control method in a BeiDou communication system according to an embodiment of this application.

As shown in FIG. 11C, the data transmission control method in the BeiDou communication system may include the following steps.

S1101: After adding padding data and a redundant length indicator field to a first message data convergence protocol service data unit MDCP SDU at a message data convergence protocol MDCP layer, a terminal 100 divides a first MDCP SDU to which the padding data and the redundant length indicator field are added into M message data convergence protocol protocol data units MDCP PDUs.

M is a positive integer, the redundant length indicator field indicates a data length of the padding data, the M MDCP PDUs include a first MDCP PDU, packet header information of the first MDCP PDU includes a successor indicator field, and the successor indicator field indicates a sequence of the first MDCP PDU in the M MDCP PDUs. The terminal sends the first MDCP PDU to a BeiDou network device.

In a possible implementation, if M is greater than 1, the successor indicator field of the first MDCP PDU is a first value, and the first value indicates that the first MDCP PDU is the 1 ^{st} MDCP PDU in the M MDCP PDUs; if M is greater than 1, the successor indicator field of the first MDCP PDU is a second value, and the second value indicates that the first MDCP PDU is a middle MDCP PDU in the M MDCP PDUs; or if M is greater than 1, the successor indicator field of the first MDCP PDU is a third value, and the third value indicates that the first MDCP PDU is the last MDCP PDU in the M MDCP PDUs.

In a possible implementation, if M is 1, the successor indicator field of the first MDCP PDU is a fourth value, and the fourth value indicates that the first MDCP PDU is a separate MDCP PDU.

S1102: The terminal 100 sends the first MDCP PDU to the BeiDou network device 200.

S1103: The BeiDou network device 200 receives the M message data convergence protocol protocol data units MDCP PDUs sent by the terminal.

S1104: The BeiDou network device 200 splices the M MDCP PDUs into a first message data convergence protocol service data unit MDCP SDU at the message data convergence protocol MDCP layer.

The following describes some possible implementations performed by the terminal 100.

In a possible implementation, that after adding padding data and a redundant length indicator field to a first message data convergence protocol service data unit MDCP SDU at a message data convergence protocol MDCP layer, a terminal 100 divides a first MDCP SDU to which the padding data and the redundant length indicator field are added into M message data convergence protocol protocol data units MDCP PDUs specifically includes: The terminal 100 generates an application layer packet at an application layer. The terminal 100 uses the application layer packet as the first MDCP SDU at the MDCP layer; and after adding the padding data and the redundant length indicator field to the first MDCP SDU, divides the first MDCP SDU into the M MDCP PDUs.

In a possible implementation, before that the terminal 100 uses the application layer packet as the first MDCP SDU at the MDCP layer; and after adding the padding data and the redundant length indicator field to the first MDCP SDU, divides the first MDCP SDU into the M MDCP PDUs, the method further includes: The terminal 100 obtains original data. The terminal 100 compresses the original data at the application layer, to obtain compressed data. The terminal 100 encrypts the compressed data at the application layer, to obtain encrypted data. The terminal 100 adds packet header information to a header of the encrypted data, to obtain the application layer packet, where the packet header information includes a compression indicator field and an encryption indicator field, the compression indicator field indicates a compression algorithm used when the original data is compressed, and the encryption indicator field indicates an encryption algorithm used when the compressed data is encrypted.

In a possible implementation, that the terminal 100 sends the first MDCP PDU to a BeiDou network device specifically includes: The terminal 100 transmits the first MDCP PDU to a satellite link control SLC layer as a first satellite link control service data unit SLC SDU of the SLC layer. The terminal 100 divides the first SLC SDU into N satellite link control protocol data units SLC PDUs at the SLC layer, where N is a positive integer, the N SLC PDUs include a first SLC PDU, frame header information of the first SLC PDU includes a service data unit alternate indicator SAI field, a total frame quantity field, and a frame sequence number field, the SAI field indicates whether the first SLC PDU is retransmitted data, the total frame quantity field indicates a total quantity N of SLC PDUs included in the first SLC SDU, and the frame sequence number field indicates a frame sequence number of the first SLC PDU in the first SLC SDU. The terminal 100 sends the first SLC PDU to the BeiDou network device.

In this way, whether a value of the SAI field of the SLC PDU is reversed indicates whether the SLC PDU is the retransmitted data, so that it may be ensured that the BeiDou network device identifies whether the received SLC PDU is the retransmitted data. This ensures continuous data transmission in the BeiDou communication system.

In a possible implementation, that the terminal 100 sends the first SLC PDU to the BeiDou network device specifically includes: The terminal 100 delivers the first SLC PDU from the SLC layer to a physical PHY layer as a first code block of the PHY layer. The terminal 100 adds check bit information to a tail of the first code block at the PHY layer, and encodes the first code block and the check bit information, to obtain first code data. The terminal 100 inserts pilot information into the first code data at the PHY layer, to obtain first pilot data. The terminal 100 modulates the first pilot data and a synchronization header of the first pilot data at the PHY layer, to obtain first modulated data and a first modulated synchronization header. The terminal 100 performs spreading on the first modulated data and the modulated synchronization header at the PHY layer, to obtain first spread modulated data. The terminal 100 sends the first spread modulated data as a first physical frame at the PHY layer to the BeiDou network device.

In a possible implementation, the terminal 100 determines a data length of the first MDCP PDU based on a data length of the first MDCP SDU and a data length of the first physical frame.

In this way, the terminal 100 may learn how to divide the MDCP SDU into a plurality of MDCP PDUs.

The following describes some possible implementations performed by the BeiDou network device 200.

In a possible implementation, that the BeiDou network device 200 splices the M MDCP PDUs into a first message data convergence protocol service data unit MDCP SDU at the message data convergence protocol MDCP layer includes: When a second MDCP PDU received by the BeiDou network device 200 subsequently indicates that the second MDCP PDU is the last one of the M MDCP PDUs, the BeiDou network device 200 splices the M MDCP PDUs into the first MDCP SDU at the MDCP layer, and reports the first MDCP SDU as an application layer packet from the MDCP layer to an application layer.

In a possible implementation, the application layer packet includes packet header information and encrypted data, the packet header information includes an encryption indicator field and a compression indicator field, the compression indicator field indicates a compression algorithm used when the terminal 100 compresses original data into compressed data, and the encryption indicator field indicates an encryption algorithm used when the terminal 100 encrypts the compressed data into the encrypted data; and the method further includes: The BeiDou network device 200 decrypts, at the application layer, the encrypted data in the application layer packet by using the encryption algorithm indicated by the encryption indicator field in the application layer packet, to obtain the compressed data. The BeiDou network device 200 decompresses, at the application layer, the compressed data by using the compression algorithm indicated by the compression indicator field in the application layer packet, to obtain the original data.

In a possible implementation, the method further includes: The BeiDou network device 200 splices N SLC PDUs into a first SLC SDU at an SLC layer, and reports the first SLC SDU as the first MDCP PDU from the SLC layer of the BeiDou network device 200 to the MDCP layer of the BeiDou network device 200, where the N SLC PDUs include a first SLC PDU, frame header information of the first SLC PDU includes a service data unit alternate indicator SAI field, a total frame quantity field, and a frame sequence number field, the SAI field indicates whether the first SLC PDU is retransmitted data, the total frame quantity field indicates a total quantity N of SLC PDUs included in the first SLC SDU, and the frame sequence number field indicates a frame sequence number of the first SLC PDU in the first SLC SDU.

In a possible implementation, before that the BeiDou network device 200 splices N SLC PDUs into a first SLC SDU at an SLC layer, and reports the first SLC SDU as the first MDCP PDU from the SLC layer of the BeiDou network device 200 to the MDCP layer of the BeiDou network device 200, the method further includes: The BeiDou network device 200 obtains, at a PHY layer, first spread modulated data sent by the terminal 100. The BeiDou network device 200 performs despreading on the first spread modulated data at the PHY layer, to obtain first modulated data and a first modulated synchronization header. The BeiDou network device 200 demodulates the first modulated data and the first modulated synchronization header at the PHY layer, to obtain first pilot data and a first synchronization header. The BeiDou network device 200 removes pilot information in the first pilot data at the PHY layer, to obtain first code data. The BeiDou network device 200 decodes the first code data at the PHY layer, to obtain a first code block and first check information. The BeiDou network device 200 checks the first code block at the PHY layer based on the first check information; and after the check succeeds, delivers, from the PHY layer to the SLC layer of the BeiDou network device 200, the first code block as the first SLC PDU in the first SLC SDU at the SLC layer of the BeiDou network device 200.

In a possible implementation, that the BeiDou network device 200 splices the M MDCP PDUs into a first message data convergence protocol service data unit MDCP SDU at the message data convergence protocol MDCP layer includes: After removing, at the MDCP layer, a successor indicator field of each of the M MDCP PDUs, the BeiDou network device 200 splices the M MDCP PDUs into the first MDCP SDU in a sequence indicated by the successor indicator of each of the M MDCP PDUs.

FIG. 11D is a schematic flowchart of a data transmission control method in a BeiDou communication system according to an embodiment of this application.

As shown in FIG. 11D, the data transmission control method in the BeiDou communication system may include the following steps.

S2101: A BeiDou network device 200 divides a first message data convergence protocol service data unit MDCP SDU into M message data convergence protocol protocol data units MDCP PDUs at a message data convergence protocol MDCP layer.

M is a positive integer, the M MDCP PDUs include a first MDCP PDU, packet header information of the first MDCP PDU includes a successor indicator field, and the successor indicator field indicates a sequence of the first MDCP PDU in the M MDCP PDUs. The BeiDou network device 200 sends the first MDCP PDU.

In a possible implementation, if M is greater than 1, the successor indicator field of the first MDCP PDU is a first value, and the first value indicates that the first MDCP PDU is the 1 ^{st} MDCP PDU in the M MDCP PDUs; if M is greater than 1, the successor indicator field of the first MDCP PDU is a second value, and the second value indicates that the first MDCP PDU is a middle MDCP PDU in the M MDCP PDUs; or if M is greater than 1, the successor indicator field of the first MDCP PDU is a third value, and the third value indicates that the first MDCP PDU is the last MDCP PDU in the M MDCP PDUs.

In a possible implementation, if M is 1, the successor indicator field of the first MDCP PDU is a fourth value, and the fourth value indicates that the first MDCP PDU is a separate MDCP PDU.

S2102: The BeiDou network device 200 sends the first MDCP PDU to a terminal 100.

S2103: The terminal 100 receives the M message data convergence protocol protocol data units MDCP PDUs sent by the terminal 100.

S2104: The terminal 100 splices the M MDCP PDUs into a first message data convergence protocol service data unit MDCP SDU at the message data convergence protocol MDCP layer.

The following describes some possible implementations performed by the BeiDou network device 200.

In a possible implementation, that a BeiDou network device 200 divides a first message data convergence protocol service data unit MDCP SDU into M message data convergence protocol protocol data units MDCP PDUs at a message data convergence protocol MDCP layer specifically includes: The BeiDou network device 200 generates an application layer packet at an application layer. The BeiDou network device 200 uses the application layer packet as the first MDCP SDU at the MDCP layer, and divides the first MDCP SDU into the M MDCP PDUs.

In a possible implementation, that the BeiDou network device 200 generates an application layer packet at an application layer specifically includes: The BeiDou network device 200 obtains original data. The BeiDou network device 200 compresses the original data at the application layer, to obtain compressed data. The BeiDou network device 200 encrypts the compressed data at the application layer, to obtain encrypted data. The BeiDou network device 200 adds packet header information to a header of the encrypted data, to obtain the application layer packet, where the packet header information includes a compression indicator field and an encryption indicator field, the compression indicator field indicates a compression algorithm used when the original data is compressed, and the encryption indicator field indicates an encryption algorithm used when the compressed data is encrypted.

In a possible implementation, that the BeiDou network device 200 sends the first MDCP PDU specifically includes: The BeiDou network device 200 transmits the first MDCP PDU to a satellite link control SLC layer as a first satellite link control service data unit SLC SDU of the SLC layer. The BeiDou network device 200 divides the first SLC SDU into N satellite link control protocol data units SLC PDUs at the SLC layer, where N is a positive integer, the N SLC PDUs include a first SLC PDU, frame header information of the first SLC PDU includes a first user ID field and a first frame type field, the first user ID field indicates the terminal 100 that receives a first user frame, and the first frame type field indicates a frame type of the first user frame. The BeiDou network device 200 sends the first SLC PDU.

In a possible implementation, that the BeiDou network device 200 sends a first physical frame and a second physical frame includes: The BeiDou network device 200 adds first check bit information to a tail of the first physical frame at a PHY layer, and encodes the first physical frame and the first check bit information, to obtain first code data; and adds second check bit information to a tail of the second physical frame, and encodes the second physical frame and the second check bit information, to obtain second code data. The BeiDou network device 200 modulates the first code data and a first reserved field of the first code data at the PHY layer, to obtain first modulated data, and modulates the second code data and a second reserved field of the second code data, to obtain second modulated data. The BeiDou network device 200 performs spreading on the first modulated data at the PHY layer, to obtain first spread modulated data, and performs spreading on the second modulated data, to obtain second spread modulated data. The BeiDou network device 200 sends the first spread modulated data, first pilot information of the first spread modulated data, the second spread modulated data, and second pilot information of the second spread modulated data at the PHY layer.

In a possible implementation, the method further includes: The BeiDou network device 200 determines a data length of the first MDCP PDU based on a data length of the first MDCP SDU and a data length of the first physical frame.

In this way, the BeiDou network device 200 may learn how to divide the MDCP SDU into a plurality of MDCP PDUs.

The following describes some possible implementations performed by the terminal 100.

In a possible implementation, that the terminal 100 splices the M MDCP PDUs into a first message data convergence protocol service data unit MDCP SDU at the message data convergence protocol MDCP layer includes: When a second MDCP PDU received by the terminal 100 subsequently indicates that the second MDCP PDU is the last one of the M MDCP PDUs, the terminal 100 splices the M MDCP PDUs into the first MDCP SDU at the MDCP layer, and reports the first MDCP SDU as an application layer packet from the MDCP layer to an application layer.

In a possible implementation, the application layer packet includes packet header information and encrypted data, the packet header information includes an encryption indicator field and a compression indicator field, the compression indicator field indicates a compression algorithm used when the terminal 100 compresses original data into compressed data, and the encryption indicator field indicates an encryption algorithm used when the terminal 100 encrypts the compressed data into the encrypted data; and the method further includes: The terminal 100 decrypts, at the application layer, the encrypted data in the application layer packet by using the encryption algorithm indicated by the encryption indicator field in the application layer packet, to obtain the compressed data. The terminal 100 decompresses, at the application layer, the compressed data by using the compression algorithm indicated by the compression indicator field in the application layer packet, to obtain the original data.

In a possible implementation, the method may further include: The BeiDou network device 200 splices N SLC PDUs into a first SLC SDU at an SLC layer, and reports the first SLC SDU as the first MDCP PDU from the SLC layer of the BeiDou network device 200 to the MDCP layer of the BeiDou network device 200, where the N SLC PDUs include a first SLC PDU, frame header information of the first SLC PDU includes a first user ID field and a first frame type field, the first user ID field indicates the terminal 100 that receives a first user frame, and the first frame type field indicates a frame type of the first user frame.

In a possible implementation, before that the terminal 100 splices N SLC PDUs into a first SLC SDU at an SLC layer, and reports the first SLC SDU as the first MDCP PDU from the SLC layer of the BeiDou network device 200 to the MDCP layer of the BeiDou network device 200, the method may further include: The terminal 100 obtains, at a PHY layer, first spread modulated data sent by the terminal 100. The terminal 100 performs despreading on the first spread modulated data at the PHY layer, to obtain first modulated data and a first modulated synchronization header. The terminal 100 demodulates the first modulated data and the first modulated synchronization header at the PHY layer, to obtain first pilot data and a first synchronization header. The terminal 100 removes pilot information in the first pilot data at the PHY layer, to obtain first code data. The BeiDou network device 200 decodes the first code data at the PHY layer, to obtain a first code block physical frame and first check information. The terminal 100 checks the first code block at the PHY layer based on the first check information; and after the check succeeds, delivers, from the PHY layer to the SLC layer of the terminal 100, a first user frame whose ID field is the same as an ID of the terminal 100 in the first code block as the first SLC PDU in the first SLC SDU at the SLC layer of the terminal 100.

In a possible implementation, that the terminal 100 splices the M MDCP PDUs into a first message data convergence protocol service data unit MDCP SDU at the message data convergence protocol MDCP layer includes: After removing, at the MDCP layer, a successor indicator field of each of the M MDCP PDUs, the terminal 100 splices the M MDCP PDUs into the first MDCP SDU in a sequence indicated by the successor indicator of each of the M MDCP PDUs.

The following first describes an example terminal 100 provided in embodiments of this application.

FIG. 12 is a schematic diagram of a structure of a terminal 100 according to an embodiment of this application.

The terminal 100 is used as an example below to specifically describe this embodiment. It should be understood that the terminal 100 may have more or fewer components than those shown in the figure, two or more components may be combined, or there may be different component configurations. Various components shown in the figure may be implemented by hardware including one or more signal processors and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal 100. The processor 110 communicates with the display 194 through the DSI interface, to implement a display function of the terminal 100.

The GPIO interface may be configured by software. The GPIO interface may be configured as a control signal or a data signal. In some embodiments, the GPIO interface may be configured to connect the camera 193, the display 194, the wireless communication module 160, the audio module 170, the sensor module 180, and the like to the processor 110. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger to charge the terminal 100, or may be configured to transmit data between the terminal 100 and a peripheral device, or may be configured to connect to a headset for playing audio through the headset. Alternatively, the interface may be configured to connect to another electronic device, for example, an AR device.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the terminal 100 may be implemented through the antenna 1, the antenna 2, the mobile communication module 150, the wireless communication module 160, a modem processor, a baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution, including 2G/3G/4G/5G and the like, that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, BeiDou communication, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communication module 150, and the antenna 2 is coupled to the wireless communication module 160, so that the terminal 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, a BeiDou communication technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 may communicate with the BeiDou network device 200 by using the BeiDou communication technology. Optionally, the BeiDou communication technology may exist in an independent chip, or may be integrated into the wireless communication module 160.

The terminal 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diodes, QLED), or the like. In some embodiments, the terminal 100 may include one or N displays 194, where N is a positive integer greater than 1.

The terminal 100 may implement an image photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multi media card (embedded multi media Card, eMMC), and the like according to storage specifications.

The random access memory may be directly read and written by the processor 110. The random access memory may be configured to store an operating system or an executable program (for example, machine instructions) of another running program, and may be further configured to store data of a user and an application program, and the like.

The non-volatile memory may also store an executable program, data of a user, data of an application, and the like, which may be loaded into the random access memory in advance for directly reading and writing by the processor 110.

The terminal 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode through the speaker 170A.

The receiver 170B, also referred to as an "earpiece", is configured to convert an audio electrical signal into a sound signal. When a call is answered or speech information is received by the terminal 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a change in the capacitance. When a touch operation is performed on the display 194, the terminal 100 detects intensity of the touch operation through the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a short message service message application icon, an instruction for viewing a short message service message is performed. When a touch operation whose touch operation intensity is greater than or equal to the first pressure threshold is performed on the short message service message application icon, an instruction for creating a new short message service message is performed.

The gyro sensor 180B may be configured to determine a motion posture of the terminal 100. In some embodiments, an angular velocity of the terminal 100 around three axes (namely, axes x, y, and z) may be determined through the gyro sensor 180B. The gyro sensor 180B may be configured to implement image stabilization during photographing. For example, when a shutter is pressed, the gyro sensor 180B detects an angle at which the terminal 100 jitters, calculates, based on the angle, a distance for which a lens module needs to compensate, and allows a lens to cancel the jitter of the terminal 100 through reverse motion, to implement the image stabilization. The gyro sensor 180B may be further used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip leather case through the magnetic sensor 180D. In some embodiments, when the terminal 100 is a clamshell phone, the terminal 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal 100 in various directions (usually on three axes). A magnitude and a direction of gravity may be detected when the terminal 100 is still. The acceleration sensor 180E may be further configured to recognize a posture of the electronic device, and is used in screen switching between a landscape mode and a portrait mode, a pedometer, or another application.

The distance sensor 180F is configured to measure a distance. The terminal 100 may measure a distance in an infrared manner or a laser manner. In some embodiments, in a photographing scenario, the terminal 100 may measure a distance through the distance sensor 180F to implement quick focusing.

The optical proximity sensor 180G may include, for example, a light emitting diode (LED) and an optical detector, for example, a photodiode. The light-emitting diode may be an infrared light-emitting diode. The terminal 100 transmits infrared light through the light-emitting diode. The terminal 100 detects infrared reflected light from a nearby object through the photodiode. When sufficient reflected light is detected, it may be determined that there is an object near the terminal 100. When insufficient reflected light is detected, the terminal 100 may determine that there is no object near the terminal 100. The terminal 100 may detect, through the optical proximity sensor 180G, that the user holds the terminal 100 to approach an ear for a call, to automatically turn off a screen to save power. The optical proximity sensor 180G may also be used in a leather case mode or a pocket mode to automatically unlock or lock the screen.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided on the display 194. In some other embodiments, the touch sensor 180K may alternatively be disposed on a surface of the terminal 100 at a position different from that of the display 194.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may correspond to different vibration feedback effects. A touch vibration feedback effect may be further customized.

The indicator 192 may be an indicator light, and may be configured to indicate a charging state and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The terminal 100 interacts with a network through the SIM card, to implement functions such as calling and data communication.

The foregoing content describes in detail the methods provided in this application. To better implement the foregoing solutions in embodiments of this application, embodiments of this application further provide corresponding apparatuses or devices.

In embodiments of this application, division into functional modules may be performed on the terminal 100 and the BeiDou network device 200 based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

The following describes in detail communication apparatuses in embodiments of this application with reference to FIG. 13 to FIG. 16.

When an integrated unit is used, FIG. 13 is a schematic diagram of a structure of a communication apparatus 1300 according to an embodiment of this application. The communication apparatus 1300 may be the terminal 100 in the foregoing embodiments. Optionally, the communication apparatus 1300 may be a chip/chip system, for example, a BeiDou communication chip. As shown in FIG. 13, the communication apparatus 1300 may include a transceiver unit 1310 and a processing unit 1320.

In a design, the transceiver unit 1310 may be configured to receive an MDCP PDU sent by the BeiDou network device 200, or may be configured to send an MDCP PDU to the BeiDou network device 200.

The processing unit 1320 may be configured to: after adding padding data and a redundant length indicator field to a first message data convergence protocol service data unit MDCP SDU at a message data convergence protocol MDCP layer, divide a first MDCP SDU to which the padding data and the redundant length indicator field are added into M message data convergence protocol protocol data units MDCP PDUs.

The processing unit 1320 may be further configured to splice the M MDCP PDUs into a first message data convergence protocol service data unit MDCP SDU at the message data convergence protocol MDCP layer.

Optionally, the transceiver unit 1310 may be further configured to perform functional steps that are related to sending and receiving and that are performed by the terminal 100 in the method embodiments shown in FIG. 11C and FIG. 11D.

Optionally, the processing unit 1320 may be further configured to perform functional steps that are related to protocol parsing, encapsulation, and operation determining and that are performed by the terminal 100 in the method embodiments shown in FIG. 11C and FIG. 11D.

It should be understood that the communication apparatus 1300 in this design may correspondingly perform the method steps performed by the terminal 100 in the foregoing embodiments. For brevity, details are not described herein again.

When an integrated unit is used, refer to FIG. 14. FIG. 14 is a schematic diagram of a structure of a communication apparatus 1400 according to an embodiment of this application. The communication apparatus 1400 may be the BeiDou network device 200 in the foregoing embodiments. Optionally, the communication apparatus 1400 may be a specific network element in the BeiDou network device 200, for example, one or a combination of a plurality of network elements in a BeiDou ground transceiver station 22, a BeiDou central station 23, and a BeiDou short message converged communication platform 24. As shown in FIG. 14, the communication apparatus 1400 may include a transceiver unit 1410 and a processing unit 1420.

In a design, the transceiver unit 1410 may be configured to: send an MDCP PDU to a terminal 100, and receive an MDCP PDU sent by the terminal 100.

The processing unit 1420 may be configured to divide a first message data convergence protocol service data unit MDCP SDU into M message data convergence protocol protocol data units MDCP PDUs at a message data convergence protocol MDCP layer.

M is a positive integer, the M MDCP PDUs include a first MDCP PDU, packet header information of the first MDCP PDU includes a successor indicator field, and the successor indicator field indicates a sequence of the first MDCP PDU in the M MDCP PDUs. The BeiDou network device 200 sends the first MDCP PDU.

In a possible implementation, if M is greater than 1, the successor indicator field of the first MDCP PDU is a first value, and the first value indicates that the first MDCP PDU is the 1^{st} MDCP PDU in the M MDCP PDUs; if M is greater than 1, the successor indicator field of the first MDCP PDU is a second value, and the second value indicates that the first MDCP PDU is a middle MDCP PDU in the M MDCP PDUs; or if M is greater than 1, the successor indicator field of the first MDCP PDU is a third value, and the third value indicates that the first MDCP PDU is the last MDCP PDU in the M MDCP PDUs.

In a possible implementation, if M is 1, the successor indicator field of the first MDCP PDU is a fourth value, and the fourth value indicates that the first MDCP PDU is a separate MDCP PDU.

The processing unit 1420 may be further configured to splice the M MDCP PDUs into a first message data convergence protocol service data unit MDCP SDU at the message data convergence protocol MDCP layer.

Optionally, the transceiver unit 1410 may be further configured to perform functional steps that are related to sending and receiving and that are performed by the BeiDou network device 200 in the method embodiments shown in FIG. 11C and FIG. 11D.

Optionally, the processing unit 1420 may be further configured to perform functional steps that are related to protocol parsing, encapsulation, and operation determining and that are performed by the BeiDou network device 200 in the method embodiments shown in FIG. 11C and FIG. 11D.

It should be understood that the communication apparatus 1400 in this design may correspondingly perform the method steps performed by the BeiDou network device 200 in the foregoing embodiments. For brevity, details are not described herein again.

The foregoing describes the terminal 100 and the BeiDou network device 200 in embodiments of this application. It should be understood that any form of product having a function of the terminal 100 in FIG. 12 and any form of product having a function of the BeiDou network device 200 in FIG. 13 both fall within the protection scope of embodiments of this application.

In a possible product form, the terminal 100 in embodiments of this application may be implemented by using a general bus architecture.

FIG. 15 is a schematic diagram of a structure of a communication apparatus 1500 according to an embodiment of this application. The communication apparatus 1500 may be the terminal 100 or an apparatus in the terminal 100. As shown in FIG. 15, the communication apparatus 1500 includes a processor 1501 and a transceiver 1502 that is internally connected to and communicates with the processor. The processor 1501 is a general-purpose processor, a dedicated processor, or the like. For example, the processor 1501 may be a baseband processor or a central processing unit of satellite communication. The baseband processor of satellite communication may be configured to process a satellite communication protocol and satellite communication data. The central processing unit may be configured to: control a communication apparatus (for example, a baseband chip, a terminal, or a terminal chip), execute a computer program, and process data of the computer program. The transceiver 1502 may be referred to as a transceiver unit, a transceiver machine, a transceiver circuit, or the like, and is configured to implement a transceiver function. The transceiver 1502 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1500 may further include an antenna 1503 and/or a radio frequency unit (not shown in the figure). The antenna 1503 and/or the radio frequency unit may be located inside the communication apparatus 1500, or may be separated from the communication apparatus 1400. In other words, the antenna 1503 and/or the radio frequency unit may be deployed remotely or in a distributed manner.

Optionally, the communication apparatus 1500 may include one or more memories 1504. The memory 1504 may store instructions. The instructions may be a computer program. The computer program may be run on the communication apparatus 1500, so that the communication apparatus 1500 performs the method described in the foregoing method embodiments. Optionally, the memory 1504 may further store data. The communication apparatus 1500 and the memory 1504 may be separately disposed, or may be integrated.

The processor 1501, the transceiver 1502, and the memory 1504 may be connected through a communication bus.

In a design, the communication apparatus 1500 may be configured to perform a function of the terminal 100 in the foregoing embodiments. The processor 1501 may be configured to perform functional steps that are related to protocol parsing, encapsulation, and operation determining and that are performed by the terminal 100 in the embodiments shown in FIG. 11C and FIG. 11D, and/or another process of the technology described in this specification. The transceiver 1502 may be configured to perform functional steps that are related to protocol parsing, encapsulation, and operation determining and that are performed by the terminal 100 in the embodiments shown in FIG. 11C and FIG. 11D, and/or another process of the technology described in this specification.

In any one of the foregoing designs, the processor 1501 may include a transceiver configured to implement sending and receiving functions. For example, the transceiver may be a transceiver circuit, an interface, or an interface circuit. The transceiver circuit, the interface, or the interface circuit configured to implement receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1501 may store instructions. The instructions may be a computer program. The computer program is run on the processor 1501, so that the communication apparatus 1500 may perform the method steps performed by the terminal 100 in the foregoing method embodiments. The computer program may be fixed in the processor 1501. In this case, the processor 1501 may be implemented by hardware.

In an implementation, the communication apparatus 1500 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 15. The communication apparatus 1500 may be an independent device or may be a part of a large device. For example, the communication apparatus 1500 may be:
(1) an independent integrated circuit IC, a chip, a chip system, or a subsystem;
(2) a set including one or more ICs, where optionally, the set of ICs may further include a storage component configured to store data and a computer program;
(3) an ASIC, like a modem (Modem);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, any network element (for example, a BeiDou ground transceiver station 22, a BeiDou central station 23, or a BeiDou short message converged communication platform 24) in the BeiDou network device 200 in this embodiment of this application may be implemented by using a general bus architecture.

FIG. 16 is a schematic diagram of a structure of a communication apparatus 1600 according to an embodiment of this application. The communication apparatus 1600 may be the BeiDou network device 200 or an apparatus in the BeiDou network device 200. As shown in FIG. 16, the communication apparatus 1600 includes a processor 1601 and a transceiver 1602 that is internally connected to and communicates with the processor. The processor 1601 is a general-purpose processor, a dedicated processor, or the like. For example, the processor 1601 may be a baseband processor or a central processing unit of satellite communication. The baseband processor of satellite communication may be configured to process a satellite communication protocol and satellite communication data. The central processing unit may be configured to: control a communication apparatus (for example, a baseband chip), execute a computer program, and process data of the computer program. The transceiver 1602 may be referred to as a transceiver unit, a transceiver machine, a transceiver circuit, or the like, and is configured to implement a transceiver function. The transceiver 1602 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1600 may further include an antenna 1603 and/or a radio frequency unit (not shown in the figure). The antenna 1603 and/or the radio frequency unit may be located inside the communication apparatus 1600, or may be separated from the communication apparatus 1600. In other words, the antenna 1603 and/or the radio frequency unit may be deployed remotely or in a distributed manner.

Optionally, the communication apparatus 1600 may include one or more memories 1604. The memory 1604 may store instructions. The instructions may be a computer program. The computer program may be run on the communication apparatus 1600, so that the communication apparatus 1600 performs the method described in the foregoing method embodiments. Optionally, the memory 1604 may further store data. The communication apparatus 1600 and the memory 1604 may be separately disposed, or may be integrated.

The processor 1601, the transceiver 1602, and the memory 1604 may be connected through a communication bus.

In a design, the communication apparatus 1600 may be configured to perform a function of the BeiDou network device 200 in the foregoing embodiments. The processor 1601 may be configured to perform functional steps that are related to protocol parsing, encapsulation, and operation determining and that are performed by the BeiDou network device 200 in the embodiments shown in FIG. 11C and FIG. 11D, and/or another process of the technology described in this specification. The transceiver 1602 may be configured to perform functional steps that are related to protocol parsing, encapsulation, and operation determining and that are performed by the BeiDou network device 200 in the embodiments shown in FIG. 11C and FIG. 11D, and/or another process of the technology described in this specification.

In any one of the foregoing designs, the processor 1601 may include a transceiver configured to implement sending and receiving functions. For example, the transceiver may be a transceiver circuit, an interface, or an interface circuit. The transceiver circuit, the interface, or the interface circuit configured to implement receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1601 may store instructions. The instructions may be a computer program. The computer program is run on the processor 1601, so that the communication apparatus 1600 may perform the method steps performed by the terminal 100 in the foregoing method embodiments. The computer program may be fixed in the processor 1601. In this case, the processor 1601 may be implemented by hardware.

An embodiment of this application further provides a computer-readable storage medium. The computer-readable storage medium stores computer program code. When the processor executes the computer program code, the communication apparatus is enabled to perform the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, so that the apparatus performs the method in any one of the foregoing embodiments.

An embodiment of this application further provides a BeiDou communication system. The BeiDou communication system includes a terminal 100 and a BeiDou network device 200. The terminal 100 and the BeiDou network device 200 may perform the method in any one of the foregoing embodiments.

A short message communication function in the BeiDou communication system is described in this application. It may be understood that another satellite system may also have a communication function that supports a short message. Therefore, in the BeiDou communication system, if another satellite system also supports a short message communication function, the method described in this application is also applicable to communication of the another satellite system.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "when it is determined that", "in response to determining", "when (a stated condition or event) is detected", or "in response to detecting (a stated condition or event)".

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A data transmission control method in a satellite communication system supporting a short message communication function, comprising:
Dividing (S1101), by a terminal after adding padding data and a redundant length indicator field to a first message data convergence protocol service data unit MDCP SDU at a message data convergence protocol MDCP layer, a first MDCP SDU to which the padding data and the redundant length indicator field are added into M message data convergence protocol protocol data units MDCP PDUs, wherein M is a positive integer, the redundant length indicator field indicates a data length of the padding data, the M MDCP PDUs comprise a first MDCP PDU, packet header information of the first MDCP PDU comprises a successor indicator field, and the successor indicator field indicates a sequence of the first MDCP PDU in the M MDCP PDUs; and
Sending (S1102), by the terminal, the first MDCP PDU to a satellite network device.

2. The method according to claim 1, wherein
if M is greater than 1, the successor indicator field of the first MDCP PDU is a first value, and the first value indicates that the first MDCP PDU is the 1" MDCP PDU in the M MDCP PDUs;
if M is greater than 1, the successor indicator field of the first MDCP PDU is a second value, and the second value indicates that the first MDCP PDU is a middle MDCP PDU in the M MDCP PDUs; or
if M is greater than 1, the successor indicator field of the first MDCP PDU is a third value, and the third value indicates that the first MDCP PDU is the last MDCP PDU in the M MDCP PDUs.

3. The method according to claim 1 or 2, wherein if M is 1, the successor indicator field of the first MDCP PDU is a fourth value, and the fourth value indicates that the first MDCP PDU is a separate MDCP PDU.

4. The method according to any one of claims 1 to 3, wherein the dividing, by a terminal after adding padding data and a redundant length indicator field to a first message data convergence protocol service data unit MDCP SDU at a message data convergence protocol MDCP layer, a first MDCP SDU to which the padding data and the redundant length indicator field are added into M message data convergence protocol protocol data units MDCP PDUs specifically comprises:
generating, by the terminal, an application layer packet at an application layer; and
using, by terminal, the application layer packet as the first MDCP SDU at the MDCP layer; and after adding the padding data and the redundant length indicator field to the first MDCP SDU, dividing the first MDCP SDU into the M MDCP PDUs.

5. The method according to claim 4, wherein before the using, by terminal, the application layer packet as the first MDCP SDU at the MDCP layer; and after adding the padding data and the redundant length indicator field to the first MDCP SDU, dividing the first MDCP SDU into the M MDCP PDUs, the method further comprises:
obtaining, by the terminal, original data;
compressing, by the terminal, the original data at the application layer, to obtain compressed data;
encrypting, by the terminal, the compressed data at the application layer, to obtain encrypted data; and
adding, by the terminal, packet header information to a header of the encrypted data, to obtain the application layer packet, wherein the packet header information comprises a compression indicator field and an encryption indicator field, the compression indicator field indicates a compression algorithm used when the original data is compressed, and the encryption indicator field indicates an encryption algorithm used when the compressed data is encrypted.

6. The method according to any one of claims 1 to 5, wherein the sending, by the terminal, the first MDCP PDU to a satellite network device specifically comprises:
transmitting, by the terminal, the first MDCP PDU to a satellite link control SLC layer as a first satellite link control service data unit SLC SDU of the SLC layer;
dividing, by the terminal, the first SLC SDU into N satellite link control protocol data units SLC PDUs at the SLC layer, wherein N is a positive integer, the N SLC PDUs comprise a first SLC PDU, frame header information of the first SLC PDU comprises a service data unit alternate indicator SAI field, a total frame quantity field, and a frame sequence number field, the SAI field indicates whether the first SLC PDU is retransmitted data, the total frame quantity field indicates a total quantity N of SLC PDUs comprised in the first SLC SDU, and the frame sequence number field indicates a frame sequence number of the first SLC PDU in the first SLC SDU; and
sending, by the terminal, the first SLC PDU to the satellite network device.

7. The method according to claim 6, wherein the sending, by the terminal, the first SLC PDU to the satellite network device specifically comprises:
delivering, by the terminal, the first SLC PDU from the SLC layer to a physical PHY layer as a first code block of the PHY layer;
adding, by the terminal, check bit information to a tail of the first code block at the PHY layer, and encoding the first code block and the check bit information, to obtain first code data;
inserting, by the terminal, pilot information into the first code data at the PHY layer, to obtain first pilot data;
modulating, by the terminal, the first pilot data and a synchronization header of the first pilot data at the PHY layer, to obtain first modulated data and a first modulated synchronization header;
performing, by the terminal, spreading on the first modulated data and the modulated synchronization header at the PHY layer, to obtain first spread modulated data; and
sending, by the terminal, the first spread modulated data as a first physical frame at the PHY layer to the satellite network device.

8. A data transmission control method in a satellite communication system supporting a short message communication function, comprising:
Receiving (S2103), by a terminal, M message data convergence protocol protocol data units MDCP PDUs sent by a satellite network device, wherein M is a positive integer, the M MDCP PDUs comprise a first MDCP PDU, packet header information of the first MDCP PDU comprises a successor indicator field, and the successor indicator field indicates a sequence of the first MDCP PDU in the M MDCP PDUs; and
Splicing (S2104), by the terminal, the M MDCP PDUs into a first message data convergence protocol service data unit MDCP SDU at a message data convergence protocol MDCP layer.

9. The method according to claim 8, wherein
if M is greater than 1, the successor indicator field of the first MDCP PDU is a first value, and the first value indicates that the first MDCP PDU is the 1^{st} MDCP PDU in the M MDCP PDUs;
if M is greater than 1, the successor indicator field of the first MDCP PDU is a second value, and the second value indicates that the first MDCP PDU is a middle MDCP PDU in the M MDCP PDUs; or
if M is greater than 1, the successor indicator field of the first MDCP PDU is a third value, and the third value indicates that the first MDCP PDU is the last MDCP PDU in the M MDCP PDUs.

10. The method according to claim 8 or 9, wherein the successor indicator field of the first MDCP PDU is a fourth value, and the fourth value indicates that the first MDCP PDU is a separate MDCP PDU.

11. The method according to any one of claims 8 to 10, wherein the splicing, by the terminal, the M MDCP PDUs into a first message data convergence protocol service data unit MDCP SDU at a message data convergence protocol MDCP layer comprises:
when a second MDCP PDU received by the terminal subsequently indicates that the second MDCP PDU is the last one of the M MDCP PDUs, splicing, by the terminal, the M MDCP PDUs into the first MDCP SDU at the MDCP layer, and reporting the first MDCP SDU as an application layer packet from the MDCP layer to an application layer.

12. The method according to claim 11, wherein the application layer packet comprises packet header information and encrypted data, the packet header information comprises an encryption indicator field and a compression indicator field, the compression indicator field indicates a compression algorithm used when the terminal compresses original data into compressed data, and the encryption indicator field indicates an encryption algorithm used when the terminal encrypts the compressed data into the encrypted data; and
the method further comprises:
decrypting, by the terminal at the application layer, the encrypted data in the application layer packet by using the encryption algorithm indicated by the encryption indicator field in the application layer packet, to obtain the compressed data; and
decompressing, by the terminal at the application layer, the compressed data by using the compression algorithm indicated by the compression indicator field in the application layer packet, to obtain the original data.

13. The method according to any one of claims 8 to 12, wherein the method further comprises:
splicing, by the satellite network device, N SLC PDUs into a first SLC SDU at an SLC layer, and reporting the first SLC SDU as the first MDCP PDU from the SLC layer of the satellite network device to the MDCP layer of the satellite network device, wherein the N SLC PDUs comprise a first SLC PDU, frame header information of the first SLC PDU comprises a first user ID field and a first frame type field, the first user ID field indicates the terminal that receives a first user frame, and the first frame type field indicates a frame type of the first user frame.

14. A communication apparatus(1500) supporting a short message communication function, comprising one or more processors (1501), one or more memories (1504), and a transceiver (1502), wherein the transceiver and the one or more memories are coupled to the one or more processors, the one or more memories are configured to store computer program code, and the computer program code comprises computer instructions; and when the one or more processors execute the computer instructions, the communication apparatus performs the data transmission control method in the satellite communication system according to any one of claims 1 to 7 and/or claims 8 to 13.

15. A chip or a chip system (1300) supporting a short message communication function, applied to a terminal, and comprising a processing circuit and an interface circuit, wherein the interface circuit is configured to receive code instructions and transmit the code instructions to the processing circuit, and the processing circuit is configured to run the code instructions to perform the data transmission control method in the satellite communication system according to any one of claims 1 to 7 and/or claims 8 to 13.

## Patentansprüche

1. Datenübertragungssteuerungsverfahren in einem Satellitenkommunikationssystem, das eine Kurznachrichtenkommunikationsfunktion unterstützt, das umfasst:
Unterteilen (S1101), durch ein Endgerät nach Hinzufügen von Fülldaten und einem redundanten Längenindikatorfeld zu einer ersten Nachrichtendatenkonvergenzprotokolldienstdateneinheit, MDCP-SDU, auf einer Nachrichtendatenkonvergenzprotokoll(MDCP)-Schicht, einer ersten MDCP-SDU, zu der die Fülldaten und das redundante Längenindikatorfeld hinzugefügt sind, in M Nachrichtendatenkonvergenzprotokollprotokolldateneinheiten, MDCP-PDUs, wobei M eine positive ganze Zahl ist, das redundante Längenindikatorfeld eine Datenlänge der Fülldaten angibt, die M MDCP-PDUs eine erste MDCP-PDU umfassen, Paketkopfinformationen der ersten MDCP-PDU ein Nachfolgerindikatorfeld umfassen, und das Nachfolgerindikatorfeld eine Sequenz der ersten MDCP-PDU in den M MDCP-PDUs angibt; und
Senden (S1102), durch das erste Endgerät, der ersten MDCP PDU an eine Satellitennetzwerkvorrichtung.

2. Verfahren nach Anspruch 1, wobei
falls M größer als 1 ist, das Nachfolgeindikatorfeld der ersten MDCP-PDU ein erster Wert ist und der erste Wert angibt, dass die erste MDCP-PDU die erste^{.} MDCP-PDU der M MDCP-PDUs ist;
falls M größer als 1 ist, das Nachfolgerindikatorfeld der ersten MDCP-PDU ein zweiter Wert ist und der zweite Wert angibt, dass die erste MDCP-PDU eine mittlere MDCP-PDU in den M MDCP-PDUs ist; oder
falls M größer als 1 ist, das Nachfolgeindikatorfeld der ersten MDCP-PDU ein dritter Wert ist und der dritte Wert angibt, dass die erste MDCP-PDU die letzte MDCP-PDU in den M MDCP-PDUs ist.

3. Verfahren nach Anspruch 1 oder 2, wobei, falls M 1 ist, das Nachfolgerindikatorfeld der ersten MDCP-PDU ein vierter Wert ist, und der vierte Wert angibt, dass die erste MDCP-PDU eine separate MDCP-PDU ist.

4. Verfahren nach einem der Ansprüche 1 bis 3, wobei das Unterteilen, durch ein Endgerät nach dem Hinzufügen von Fülldaten und einem redundanten Längenindikatorfeld zu einer ersten Nachrichtendatenkonvergenzprotokolldienstdateneinheit, MDCP-SDU, auf einer Nachrichtendatenkonvergenzprotokoll(MDCP)-Schicht, einer ersten MDCP-SDU, zu der die Fülldaten und das redundante Längenindikatorfeld hinzugefügt sind, in M Nachrichtendatenkonvergenzprotokollprotokolldateneinheiten, MDCP PDUs, spezifisch umfasst:
Erzeugen, durch das Endgerät, eines Anwendungsschichtpakets auf einer Anwendungsschicht; und
Verwenden, durch das Endgerät, des Anwendungsschichtpakets als die erste MDCP-SDU auf der MDCP-Schicht; und nach Hinzufügen der Fülldaten und des redundanten Längenindikatorfelds zu der ersten MDCP-SDU, Unterteilen der ersten MDCP-SDU in die M MDCP-PDUs.

5. Verfahren nach Anspruch 4, wobei vor dem Verwenden, durch das Endgerät, des Anwendungsschichtpakets als die erste MDCP-SDU auf der MDCP-Schicht; und nach dem Hinzufügen der Fülldaten und des redundanten Längenindikatorfelds zu der ersten MDCP-SDU, dem Unterteilen der ersten MDCP-SDU in die M MDCP-PDUs, das Verfahren ferner umfasst:
Erhalten, durch das Endgerät, von Originaldaten;
Komprimieren, durch das Endgerät, der Originaldaten auf der Anwendungsschicht, um komprimierte Daten zu erhalten;
Verschlüsseln, durch das Endgerät, der komprimierten Daten auf der Anwendungsschicht, um verschlüsselte Daten zu erhalten; und
Hinzufügen, durch das Endgerät, von Paketkopfinformationen zu einem Kopf der verschlüsselten Daten, um das Anwendungsschichtpaket zu erhalten, wobei die Paketkopfinformationen ein Komprimierungsindikatorfeld und ein Verschlüsselungsindikatorfeld umfassen, das Komprimierungsindikatorfeld einen Komprimierungsalgorithmus angibt, der verwendet wird, wenn die Originaldaten komprimiert werden, und das Verschlüsselungsindikatorfeld einen Verschlüsselungsalgorithmus angibt, der verwendet wird, wenn die komprimierten Daten verschlüsselt werden.

6. Verfahren nach einem der Ansprüche 1 bis 5, wobei das Senden, durch das Endgerät, der ersten MDCP-PDU an eine Satellitennetzwerkvorrichtung spezifisch umfasst:
Übertragen, durch das Endgerät, der ersten MDCP-PDU an eine Satellitenverbindungssteuerungs(SLC)-Schicht als eine erste Satellitenverbindungssteuerungsdienstdateneinheit SLC-SDU der SLC-Schicht;
Unterteilen, durch das Endgerät, der ersten SLC-SDU in N Satellitenverbindungssteuerungsprotokolldateneinheiten, SLC-PDUs, auf der SLC-Schicht, wobei N eine positive ganze Zahl ist, die N SLC-PDUs eine erste SLC-PDU umfassen, die Rahmenkopfinformationen der ersten SLC-PDU ein Dienstdateneinheitalternativindikator(SAI)-Feld, ein Gesamtrahmenmengenfeld und ein Rahmensequenznummernfeld umfasst, das SAI-Feld angibt, ob die erste SLC-PDU erneut übertragene Daten ist, das Gesamtrahmenmengenfeld eine Gesamtmenge N von SLC-PDUs angibt, die in der ersten SLC-SDU umfasst sind, und das Rahmensequenznummernfeld eine Rahmensequenznummer der ersten SLC-PDU in der ersten SLC-SDU angibt; und
Senden, durch das Endgerät, der ersten SLC-PDU an die Satellitennetzwerkvorrichtung.

7. Verfahren nach Anspruch 6, wobei das Senden, durch das Endgerät, der ersten SLC-PDU, an die Satellitennetzwerkvorrichtung spezifisch umfasst:
Liefern, durch das Endgerät, der ersten SLC-PDU von der SLC-Schicht an eine physikalische (PHY) Schicht als einen ersten Codeblock der PHY-Schicht;
Hinzufügen, durch das Endgerät, von Prüfbitinformationen an ein Ende des ersten Codeblocks auf der PHY-Schicht, und Codieren des ersten Codeblocks und der Prüfbitinformationen, um erste Codedaten zu erhalten;
Einfügen, durch das Endgerät, von Pilotinformationen in die ersten Codedaten auf der PHY-Schicht, um erste Pilotdaten zu erhalten;
Modulieren, durch das Endgerät, der ersten Pilotdaten und eines Synchronisationskopfs der ersten Pilotdaten auf der PHY-Schicht, um erste modulierte Daten und einen ersten modulierten Synchronisationskopf zu erhalten;
Durchführen, durch das Endgerät, einer Spreizung an den ersten modulierten Daten und dem modulierten Synchronisationskopf auf der PHY-Schicht, um erste gespreizte modulierte Daten zu erhalten; und
Senden, durch das Endgerät, der ersten spreizmodulierten Daten als einen ersten physikalischen Rahmen auf der PHY-Schicht an die Satellitennetzwerkvorrichtung.

8. Datenübertragungssteuerungsverfahren in einem Satellitenkommunikationssystem, das eine Kurznachrichtenkommunikationsfunktion unterstützt, das umfasst:
Empfangen (S2103), durch ein Endgerät, von M Nachrichtendatenkonvergenzprotokollprotokolldateneinheiten, MDCP-PDUs, die durch eine Satellitennetzwerkvorrichtung gesendet werden, wobei M eine positive ganze Zahl ist, die M MDCP-PDUs eine erste MDCP-PDU umfassen, Paketkopfinformationen der ersten MDCP-PDU ein Nachfolgerindikatorfeld umfassen, und das Nachfolgerindikatorfeld eine Sequenz der ersten MDCP-PDU in den M MDCP-PDUs angibt; und
Zusammenführen (S2104), durch das Endgerät, der M MDCP-PDUs zu einer ersten Nachrichtendatenkonvergenzprotokolldienstdateneinheit, MDCP-SDU, auf einer Nachrichtendatenkonvergenzprotokoll(MDCP)-Schicht.

9. Verfahren nach Anspruch 8, wobei
falls M größer als 1 ist, das Nachfolgeindikatorfeld der ersten MDCP-PDU ein erster Wert ist und der erste Wert angibt, dass die erste MDCP-PDU die erste. MDCP-PDU der M MDCP-PDUs ist;
falls M größer als 1 ist, das Nachfolgerindikatorfeld der ersten MDCP-PDU ein zweiter Wert ist und der zweite Wert angibt, dass die erste MDCP-PDU eine mittlere MDCP-PDU in den M MDCP-PDUs ist; oder
falls M größer als 1 ist, das Nachfolgeindikatorfeld der ersten MDCP-PDU ein dritter Wert ist und der dritte Wert angibt, dass die erste MDCP-PDU die letzte MDCP-PDU in den M MDCP-PDUs ist.

10. Verfahren nach Anspruch 8 oder 9, wobei das Nachfolgerindikatorfeld der ersten MDCP-PDU ein vierter Wert ist, und der vierte Wert angibt, dass die erste MDCP-PDU eine separate MDCP-PDU ist.

11. Verfahren nach einem der Ansprüche 8 bis 10, wobei das Zusammenführen, durch das Endgerät, der M MDCP-PDUs zu einer ersten Nachrichtendatenkonvergenzprotokolldienstdateneinheit, MDCP-SDU, auf einer Nachrichtendatenkonvergenzprotokoll(MDCP)-Schicht umfasst:
wenn eine zweite MDCP-PDU, die durch das Endgerät empfangen wird, anschließend angibt, dass die zweite MDCP-PDU die letzte der M MDCP-PDUs ist,
Zusammenführen, durch das Endgerät, der M MDCP-PDUs zu der ersten MDCP-SDU auf der MDCP-Schicht, und Melden der ersten MDCP-SDU als ein Anwendungsschichtpaket von der MDCP-Schicht an eine Anwendungsschicht.

12. Verfahren nach Anspruch 11, wobei das Anwendungsschichtpaket Paketkopfinformationen und verschlüsselte Daten umfasst, die Paketkopfinformationen ein Verschlüsselungsindikatorfeld und ein Komprimierungsindikatorfeld umfassen, das Komprimierungsindikatorfeld einen Komprimierungsalgorithmus angibt, der verwendet wird, wenn das Endgerät Originaldaten in komprimierte Daten komprimiert, und das Verschlüsselungsindikatorfeld einen Verschlüsselungsalgorithmus angibt, der verwendet wird, wenn das Endgerät die komprimierten Daten in die verschlüsselten Daten verschlüsselt; und
wobei das Verfahren ferner umfasst:
Entschlüsseln, durch das Endgerät auf der Anwendungsschicht, der verschlüsselten Daten in dem Anwendungsschichtpaket durch Verwenden des Verschlüsselungsalgorithmus, der durch das Verschlüsselungsindikatorfeld in dem Anwendungsschichtpaket angegeben wird, um die komprimierten Daten zu erhalten; und
Dekomprimieren, durch das Endgerät auf der Anwendungsschicht, der komprimierten Daten durch Verwenden des Komprimierungsalgorithmus, der durch das Komprimierungsindikatorfeld in dem Anwendungsschichtpaket angegeben wird, um die Originaldaten zu erhalten.

13. Verfahren nach einem der Ansprüche 8 bis 12, wobei das Verfahren ferner umfasst:
Zusammenführen, durch die Satellitennetzwerkvorrichtung, von N SLC-PDUs zu einer ersten SLC-SDU auf einer SLC-Schicht, und Melden der ersten SLC-SDU als die erste MDCP-PDU von der SLC-Schicht der Satellitennetzwerkvorrichtung an die MDCP-Schicht der Satellitennetzwerkvorrichtung, wobei die N SLC-PDUs eine erste SLC-PDU umfassen, die Rahmenkopfinformationen der ersten SLC-PDU ein erstes Benutzer-ID-Feld und ein erstes Rahmentypfeld umfassen, das erste Benutzer-ID-Feld das Endgerät angibt, das einen ersten Benutzerrahmen empfängt, und das erste Rahmentypfeld einen Rahmentyp des ersten Benutzerrahmens angibt.

14. Kommunikationsvorrichtung (1500), die eine Kurznachrichtenkommunikationsfunktion unterstützt, die einen oder mehrere Prozessoren (1501), einen oder mehrere Speicher (1504) und einen Sender-Empfänger (1502) umfasst, wobei der Sender-Empfänger und der eine oder die mehreren Speicher an den einen oder die mehreren Prozessoren gekoppelt sind, der eine oder die mehreren Speicher konfiguriert sind, um Computerprogrammcode zu speichern, und der Computerprogrammcode Computeranweisungen umfasst; und wenn der eine oder die mehreren Prozessoren die Computeranweisungen ausführen, die Kommunikationsvorrichtung das Datenübertragungssteuerungsverfahren in dem Satellitenkommunikationssystem nach einem der Ansprüche 1 bis 7 und/oder der Ansprüche 8 bis 13 durchführt.

15. Chip oder ein Chipsystem (1300), das eine Kurznachrichtenkommunikationsfunktion unterstützt, die auf ein Endgerät angewendet wird und eine Verarbeitungsschaltung und eine Schnittstellenschaltung umfasst, wobei die Schnittstellenschaltung konfiguriert ist, um Codeanweisungen zu empfangen und die Codeanweisungen an die Verarbeitungsschaltung zu übertragen, und die Verarbeitungsschaltung konfiguriert ist, um die Codeanweisungen ablaufen zu lassen, um das Datenübertragungssteuerungsverfahren in dem Satellitenkommunikationssystem nach einem der Ansprüche 1 bis 7 und/oder der Ansprüche 8 bis 13 durchzuführen.

## Revendications

1. Procédé de commande de transmission de données dans un système de communication par satellite prenant en charge une fonction de communication par messages courts, comprenant :
la division (S1101), par un terminal, après l'ajout de données de remplissage et d'un champ d'indicateur de longueur redondante à une première unité de données de service de protocole de convergence de données de message SDU MDCP au niveau d'une couche de protocole de convergence de données de message MDCP, d'une première SDU MDCP à laquelle les données de remplissage et le champ d'indicateur de longueur redondante sont ajoutés dans M unités de données de protocole de protocole de convergence de données de message PDU MDCP, dans lequel M est un nombre entier positif, le champ d'indicateur de longueur redondante indique une longueur de données des données de remplissage, les M PDU MDCP comprennent une première PDU MDCP, des informations d'en-tête de paquet de la première PDU MDCP comprennent un champ d'indicateur successeur, et le champ d'indicateur successeur indique une séquence de la première PDU MDCP dans les M PDU MDCP ; et
l'envoi (S1102), par le terminal, des premières PDU MDCP à un dispositif de réseau satellite.

2. Procédé selon la revendication 1, dans lequel
si M est supérieur à 1, le champ d'indicateur successeur de la première PDU MDCP est une première valeur, et la première valeur indique que la première PDU MDCP est la 1^{re} PDU MDCP dans les M PDU MDCP ;
si M est supérieur à 1, le champ d'indicateur successeur de la première PDU MDCP est une deuxième valeur, et la deuxième valeur indique que la première PDU MDCP est une PDU MDCP moyenne dans les M PDU MDCP ; ou
si M est supérieur à 1, le champ d'indicateur successeur de la première PDU MDCP est une troisième valeur, et la troisième valeur indique que la première PDU MDCP est la dernière PDU MDCP dans les M PDU MDCP.

3. Procédé selon la revendication 1 ou 2, dans lequel, si M est égal à 1, le champ d'indicateur successeur de la première PDU MDCP est une quatrième valeur, et la quatrième valeur indique que la première PDU MDCP est une PDU MDCP distincte.

4. Procédé selon l'une quelconque des revendications 1 à 3, dans lequel la division, par un terminal, après l'ajout de données de remplissage et d'un champ d'indicateur de longueur redondante à une première unité de données de service de protocole de convergence de données de message SDU MDCP au niveau d'une couche de protocole de convergence de données de message MDCP, d'une première SDU MDCP à laquelle les données de remplissage et le champ d'indicateur de longueur redondante sont ajoutés dans M unités de données de protocole de protocole de convergence de données de message PDU MDCP comprend spécifiquement :
la génération, par le terminal, d'un paquet de couche d'application au niveau d'une couche d'application ; et
l'utilisation, par le terminal, du paquet de couche d'application en tant que première SDU MDCP au niveau de la couche MDCP ; et après l'ajout des données de remplissage et du champ d'indicateur de longueur redondante à la première SDU MDCP, la division de la première SDU MDCP en M PDU MDCP.

5. Procédé selon la revendication 4, dans lequel, avant l'utilisation, par le terminal, du paquet de couche d'application en tant que première SDU MDCP au niveau de la couche MDCP ; et après l'ajout des données de remplissage et du champ d'indicateur de longueur redondante à la première SDU MDCP, la division de la première SDU MDCP en M PDU MDCP, le procédé comprend en outre :
l'obtention, par le terminal, de données d'origine ;
la compression, par le terminal, des données d'origine au niveau de la couche d'application, afin d'obtenir des données compressées ;
le chiffrement, par le terminal, des données compressées au niveau de la couche d'application, afin d'obtenir des données chiffrées ; et
l'ajout, par le terminal, d'informations d'en-tête de paquet à un en-tête des données chiffrées, afin d'obtenir le paquet de couche d'application, dans lequel les informations d'en-tête de paquet comprennent un champ d'indicateur de compression et un champ d'indicateur de chiffrement, le champ d'indicateur de compression indique un algorithme de compression utilisé lorsque les données d'origine sont compressées, et le champ d'indicateur de chiffrement indique un algorithme de chiffrement utilisé lorsque les données compressées sont chiffrées.

6. Procédé selon l'une quelconque des revendications 1 à 5, dans lequel l'envoi, par le terminal, de la première PDU MDCP à un dispositif de réseau satellite comprend spécifiquement :
la transmission, par le terminal, de la première PDU MDCP à une couche de commande de liaison par satellite SLC en tant que première unité de données de service de commande de liaison par satellite SDU SLC de la couche SLC ;
la division, par le terminal, de la première SDU SLC en N unités de données de protocole de commande de liaison par satellite PDU SLC au niveau de la couche SLC, dans lequel N est un nombre entier positif, les N PDU SLC comprennent une première PDU SLC, des informations d'en-tête de trame de la première PDU SLC comprennent un champ d'indicateur alternatif d'unité de données de service SAI, un champ de quantité totale de trames, et un champ de numéro de séquence de trame, le champ SAI indique si la première PDU SLC correspond à des données retransmises, le champ de quantité totale de trames indique une quantité totale N de PDU SLC comprises dans la première SDU SLC, et le champ de numéro de séquence de trame indique un numéro de séquence de trame de la première PDU SLC dans la première SDU SLC ; et
l'envoi, par le terminal, de la première PDU SLC au dispositif de réseau satellite.

7. Procédé selon la revendication 6, dans lequel l'envoi, par le terminal, de la première PDU SLC au dispositif de réseau satellite comprend spécifiquement :
la distribution, par le terminal, de la première PDU SLC de la couche SLC à une couche physique PHY en tant que premier bloc de code de la couche PHY ;
l'ajout, par le terminal, d'informations de bits de contrôle à une extrémité du premier bloc de code au niveau de la couche PHY, et le codage du premier bloc de code et des informations de bits de contrôle, pour obtenir des premières données de code ;
l'insertion, par le terminal, d'informations pilotes dans les premières données de code au niveau de la couche PHY, afin d'obtenir des premières données pilotes ;
la modulation, par le terminal, des premières données pilotes et d'un en-tête de synchronisation des premières données pilotes au niveau de la couche PHY, afin d'obtenir des premières données modulées et un premier en-tête de synchronisation modulé ;
la réalisation, par le terminal, d'un étalement sur les premières données modulées et l'en-tête de synchronisation modulé au niveau de la couche PHY, afin d'obtenir des premières données modulées par étalement ; et
l'envoi, par le terminal, des premières données modulées par étalement en tant que première trame physique au niveau de la couche PHY au dispositif de réseau satellite.

8. Procédé de commande de transmission de données dans un système de communication par satellite prenant en charge une fonction de communication par messages courts, comprenant :
la réception (S2103), par un terminal, de M unités de données de protocole de protocole convergence de données de message PDU MDCP envoyées par un dispositif de réseau satellite, dans lequel M est un nombre entier positif, les M PDU MDCP comprennent une première PDU MDCP, des informations d'en-tête de paquet de la première PDU MDCP comprennent un champ d'indicateur successeur, et le champ d'indicateur successeur indique une séquence de la première PDU MDCP dans les M PDU MDCP ; et
l'assemblage (S2104), par le terminal, des M PDU MDCP dans une première unité de données de service de protocole de convergence de données de message PDU MDCP au niveau d'une couche de protocole de convergence de données de message MDCP.

9. Procédé selon la revendication 8, dans lequel
si M est supérieur à 1, le champ d'indicateur successeur de la première PDU MDCP est une première valeur, et la première valeur indique que la première PDU MDCP est la 1^{re} PDU MDCP dans les M PDU MDCP;
si M est supérieur à 1, le champ d'indicateur successeur de la première PDU MDCP est une deuxième valeur, et la deuxième valeur indique que la première PDU MDCP est une PDU MDCP moyenne dans les M PDU MDCP ; ou
si M est supérieur à 1, le champ d'indicateur successeur de la première PDU MDCP est une troisième valeur, et la troisième valeur indique que la première PDU MDCP est la dernière PDU MDCP dans les M PDU MDCP.

10. Procédé selon la revendication 8 ou 9, dans lequel le champ d'indicateur successeur de la première PDU MDCP est une quatrième valeur, et la quatrième valeur indique que la première PDU MDCP est une PDU MDCP distincte.

11. Procédé selon l'une quelconque des revendications 8 à 10, dans lequel l'assemblage, par le terminal, des M PDU MDCP dans une première unité de données de service de protocole de convergence de données de message SDU MDCP au niveau d'une couche de protocole de convergence de données de message MDCP comprend :
lorsqu'une seconde PDU MDCP reçue par le terminal indique par la suite que la seconde PDU MDCP est la dernière des M PDU MDCP, l'assemblage, par le terminal, des M PDU MDCP dans la première SDU MDCP au niveau de la couche MDCP, et le rapport de la première SDU MDCP en tant que paquet de couche d'application de la couche MDCP à une couche d'application.

12. Procédé selon la revendication 11, dans lequel le paquet de couche d'application comprend des informations d'en-tête de paquet et des données chiffrées, les informations d'en-tête de paquet comprennent un champ d'indicateur de chiffrement et un champ d'indicateur de compression, le champ d'indicateur de compression indique un algorithme de compression utilisé lorsque le terminal compresse des données d'origine en données compressées, et le champ d'indicateur de chiffrement indique un algorithme de chiffrement utilisé lorsque le terminal chiffre les données compressées en données chiffrées ; et
le procédé comprend en outre :
le déchiffrement, par le terminal au niveau de la couche d'application, des données chiffrées dans le paquet de couche d'application en utilisant un algorithme de chiffrement indiqué par le champ d'indicateur de chiffrement dans le paquet de couche d'application, afin d'obtenir les données compressées ; et
la décompression, par le terminal au niveau de la couche application, des données compressées en utilisant l'algorithme de compression indiqué par le champ d'indicateur de compression dans le paquet de couche d'application, afin d'obtenir les données d'origine.

13. Procédé selon l'une quelconque des revendications 8 à 12, dans lequel le procédé comprend en outre :
l'assemblage, par le dispositif de réseau satellite, de N PDU SLC dans une première SDU SLC au niveau d'une couche SLC, et le rapport de la première SDU SLC en tant que première PDU MDCP de la couche SLC du dispositif de réseau satellite à la couche MDCP du dispositif de réseau satellite, dans lequel les N PDU SLC comprennent une première PDU SLC, des informations d'en-tête de trame de la première PDU SLC comprennent un premier champ d'ID d'utilisateur et un premier champ de type de trame, le premier champ d'ID d'utilisateur indique le terminal qui reçoit une première trame utilisateur, et le premier champ de type de trame indique un type de trame de la première trame utilisateur.

14. Appareil de communication (1500) prenant en charge une fonction de communication par messages courts, comprenant un ou plusieurs processeurs (1501), une ou plusieurs mémoires (1504) et un émetteur-récepteur (1502), dans lequel l'émetteur-récepteur et la ou les mémoires sont couplés au ou aux processeurs, la ou les mémoires sont configurées pour stocker un code de programme informatique, et le code de programme informatique comprend des instructions informatiques ; et lorsque le ou les processeurs exécutent les instructions informatiques, l'appareil de communication réalise le procédé de commande de transmission de données dans le système de communication par satellite selon l'une quelconque des revendications 1 à 7 et/ou des revendications 8 à 13.

15. Puce ou système de puce (1300) prenant en charge une fonction de communication par messages courts, appliquée à un terminal, et comprenant un circuit de traitement et un circuit d'interface, dans lequel le circuit d'interface est configuré pour recevoir des instructions de code et transmettre les instructions de code au circuit de traitement, et le circuit de traitement est configuré pour exécuter les instructions de code afin de réaliser le procédé de commande de transmission de données dans le système de communication par satellite selon l'une quelconque des revendications 1 à 7 et/ou des revendications 8 à 13.
